# EUROPEAN PATENT SPECIFICATION

(11) **EP 1 541 968 B1**
(45) Date of publication and mention of the grant of the patent: **27.02.2008**
(21) Application number: 04256788.3
(22) Date of filing: 03.11.2004
(51) Int. Cl.: G01C 21/34, G08G 1/0968

(54) **Guiding device, system and method**
Führungsvorrichtung, System und Verfahren
Dispositif, système et procédé pour guidage

(30) Priority: 10.12.2003 JP 2003411662
(43) Date of publication of application: 15.06.2005
(73) Proprietor: Pioneer Corporation, Tokyo 153-8654 (JP); Increment P Corporation, Tokyo 153-8665 (JP)
(72) Inventor: Nakano, Toshiaki, Meguro-ku Tokyo 153-8665 (JP); Amano, Kouji, Meguro-ku Tokyo 153-8665 (JP)
(74) Representative: Haley, Stephen

(56) References cited:
- US-A1- 2002 152 020
- US-A1- 2002 156 572
- PATENT ABSTRACTS OF JAPAN vol. 2003, no. 04, 2 April 2003 (2003-04-02) & JP 2002 357446 A (YAZAKI CORP), 13 December 2002 (2002-12-13)

## Description

The present invention relates to a guiding device that notifies guidance regarding a travel of a mobile body to a destination, a system thereof, a method thereof, a program thereof, and a recording medium storing the program.

There has been a known in-vehicle navigation device that acquires traffic information (VICS data) such as traffic accidents and traffic-congestion etc. from a Vehicle Information Communication System (VICS) and superimposes indications representing the traffic conditions such as the traffic accidents and the traffic-congestion on map information to be displayed on a screen of a display unit in order to notify users. In many cases, when traffic-congestion occurs, a secondary traffic-congestion might be occurred on the roads in the vicinity thereof by drivers making a detour to avoid the original traffic-congestion. The traffic condition provided based on the VICS data represents the current condition, and therefore the drivers making a detour to avoid the traffic-congestion based on the notified current traffic condition might be caught in the secondary traffic-congestion. Thus, there is a demand for improved navigation devices that can navigate drivers to travel smoothly.

There is also a known in-vehicle navigation device that predicts and notifies the current and future traffic conditions with the use of a statistical traffic-congestion information data obtained by statistically processing the past traffic-congestion information (see, for example, Japanese Patent Laid-Open Publication No. Hei 9-113290, the right column on page 3 to the left column on page 7). Such a configuration disclosed in the above publication notifies statistical traffic-congestion information according to time factors such as time and day of the week based on the statistical traffic-congestion information data by superimposing the information on map information in various expressions corresponding to conditions of the traffic-congestion. With the notified time and day of the week, users can predict the current and possible future traffic-congestion.

Incidentally, there is known configuration, such as guidance on last train, in which public transportation user is notified that boarding time is coming by e-mail via a mobile phone when the time is coming. According to this guidance on last train, the user sets information regarding advance-notification time (e.g. 10 minutes before the boarding time of the last train), and e-mail is sent to the mobile phone used by the user based on the information regarding the advance-notification time and departure time information regarding departure time of train as public transportation at each station.

In in-vehicle navigation devices, upon setting a travel route to arrive at a destination by a predetermined time, configuration in which the departure time is notified in advance like the guidance on last train after predicting a traffic condition according to the above publication and calculating required time for the travel might be applicable. However, if the user is away from the vehicle, it is difficult to depart immediately after the advance-notification, and the user cannot arrive at the destination by the predetermined time. Examples of prior art device can be found disclosed in US2002/0156572A1 and JP2002357446.

An object of the present invention is to provide a guiding device which comprises:
a map information acquirer for acquiring map information;
a current-position information acquirer for acquiring current-position information about a current-position of a mobile body;
a destination information acquirer for acquiring destination information about a position of a destination to which the mobile body moves;
a timer for clocking time;
a scheduled time information acquirer for acquiring scheduled time information about scheduled time to arrive at the destination;
a predicted required time calculator for calculating predicted required time for the mobile body to arrive at the destination from the current-position based on the current-position information, the destination information and the map information;
a predicted departure time calculator for calculating predicted departure time for the mobile body to leave the current-position based on the scheduled time information and the predicted required time;
a notification information generator for generating departure notification information encouraging departure of the mobile body based on the predicted departure time and current time clocked by the timer
the guidance device being characterised by further comprising:
   a departure waiting state recognizer for recognizing departure waiting state indicating whether the mobile body can depart immediately or not at the current-position; and
   a notification controller for setting a time for a notifying section to notify the departure notification information according to the departure waiting state and making the notifying section notify the departure notification information based on the set time and the current time.

Preferably, the notification controller changes the set time for notifying the departure notification information according to the departure waiting state.

Preferably, the guiding device is removably attached to the mobile body,
the departure waiting state recognizer recognizes whether the guiding device is attached to the mobile body, and
the notification controller controls time for the notifying section to notify the departure guidance information when the departure waiting state recognizer recognizes that the guiding device is not attached to the mobile body earlier than time for the notifying section to notify the departure guidance information when the departure waiting state recognizer recognizes that the guiding device is attached to the mobile body.

Preferably, the guiding device further comprises:
a terminal position recognizer for recognizing a current-position when the departure waiting state recognizer recognizes that the guiding device is not attached to the mobile body; and
a terminal arrival time calculator for calculating terminal predicted required time for the mobile body to arrive at a current-position of the mobile body from the current-position of the guiding device based on the current-position recognized by the terminal position recognizer, the current-position information acquired by the current-position information acquirer and the map information, when the departure waiting state recognizer recognizes that the guiding device is not attached to the mobile body,
wherein the notification controller controls the notifying section to notify the departure notification information early based on predicted required time calculated by the terminal arrival time calculator.

Preferably, the notifying section is removably attached to the mobile body,
the departure waiting state recognizer recognizes whether the notifying section is attached, and
the notification controller controls time for the notifying section to notify the departure guidance information when the departure waiting state recognizer recognizes that the notifying section is not attached to the mobile body earlier than time for the notifying section to notify the departure guidance information when the departure waiting state recognizer recognizes that the notifying section is attached to the mobile body.

Preferably, the guiding device further comprises:
a terminal position information acquirer for acquiring terminal position information about a current-position of the notifying section; and
a terminal arrival time calculator for calculating predicted required time for the notifying section to arrive at a position of the mobile body based on the terminal position information, the current-position information and the map information, when the departure waiting state recognizer recognizes that the notifying section is not attached to the mobile body,
wherein the notification controller controls the notifying section to notify the departure notification information early based on predicted required time calculated by the terminal arrival time calculator.

Preferably, the departure waiting state recognizer recognizes operation state of a component for moving a mobile body or power supply state,
the notification controller controls time for the notifying section to notify the departure guidance information when the departure waiting state recognizer recognizes operation state in which the component is stopped or supply state in which the power supply is stopped earlier than time for the notifying section to notify the departure guidance information when the departure waiting state recognizer recognizes operation state in which the component is operated or supply state in which power is supplied.

Preferably, the guiding device further comprises a traffic information acquirer for acquiring traffic information about a traffic condition of the mobile body,
wherein the predicted required time calculator calculates predicted required time for the mobile body to arrive at the destination from the current-position based on the current-position information, the destination information and the map information as well as the traffic information.

Preferably, the predicted required time calculator recognizes a change in the traffic information, and calculates the predicted required time again every time the traffic information changes.

Preferably, the traffic information is at least either current traffic information about a traffic condition at the current time or traffic prediction information about a change of a traffic condition over time based on a statistical traffic condition obtained by statistically processing past traffic conditions based on time factors.

Preferably, the guiding device further comprises a notification time information acquirer for acquiring notification time request information requesting time for the notifying section to notify the departure notification information according to departure waiting state of the mobile body at the current-position,
wherein the notification controller changes time for the notifying section to notify the departure notification information according to the departure waiting state recognized by the departure waiting state recognizer based on the notification time request information.
Preferably, the predicted required time calculator computes a travel route for the mobile body based on the current-position information, the destination information and the map information, and calculates predicted required time for the mobile body to travel on the travel route.

The present invention further provides a guiding system which comprises:
a server having a storage for storing map information; and
the above guiding device for acquiring the map information from the server over a network.

The present invention further provides a guiding system which comprises:
the above guiding device; and
a terminal unit connected to the guiding device over a network so as to communicate therewith, the terminal unit including a notifying section for notifying the departure notification information acquired from the guiding device over the network.

The present invention further provides a guiding system which comprises:
a terminal unit having a request information generator for generating notification request information requesting notification of scheduled time information about scheduled time for a mobile body to arrive at a destination and notification for encouraging departure of the mobile body to arrive at the destination at the scheduled time, and a notifying section for notifying departure notification information for encouraging the departure of the mobile body; and
a server to which the terminal unit is connected so as to communicate therewith over a network, the server having a storage for storing map information, a current-position information acquirer for acquiring current-position information about a current-position of the mobile body, a destination information acquirer for acquiring destination information about a position of a destination to which the mobile body moves, a predicted required time calculator for calculating predicted required time for the mobile body to arrive at the destination from the current-position based on the current-position information, the destination information and the map information, and a predicted departure time calculator for calculating predicted departure time for the mobile body to leave the current-position based on the scheduled time information and the predicted required time,
the guiding system being characterised in that at least either one of the terminal unit or the server has at least either one of a departure waiting state recognizer for recognizing a departure waiting state indicating whether the mobile body can depart immediately or not at the current-position and a notification controller for setting time for a notifying section of the terminal unit to notify information encouraging departure of the mobile body according to the departure waiting state.

The present invention also provides a guiding method which comprises:
acquiring map information, current-position information about a current-position of a mobile body, destination information about a position of a destination to which the mobile body travels, and scheduled time information about scheduled time for the mobile body to arrive at the destination;
calculating predicted required time for the mobile body to arrive at the destination from the current-position based on the current-position information, the destination information and the map information;
calculating predicted departure time for the mobile body to leave the current-position based on the calculated predicted required time and the scheduled time information;
generating departure notification information encouraging departure of the mobile body based on the calculated predicted departure time and current time clocked by a timer,
the guiding method being characterised by further comprising:
   detecting departure waiting state indicating whether the mobile body can depart immediately or not at the current-position, and setting a time for a notifying section to notify the departure notification information according to the departure waiting state; and
   making the notifying section notify the departure notification information based on the set time.

Preferably, the set time for notifying the departure notification information is changed according to the departure waiting state.

The present invention further provides a guiding program for a computer executing the above guiding method.

The present invention further provides a recording medium storing the above guiding program according in a manner readable by a computer.

In the Drawings;
Fig. 1 is an exploded perspective view showing the brief configuration of a navigation device according to a first embodiment of the present invention;
Fig. 2 is a block diagram showing the brief configuration of the navigation device according to the first embodiment;
Fig. 3 is a conceptual diagram schematically showing a table structure for display data of map information according to the first embodiment;
Fig. 4 is a conceptual diagram schematically showing a table structure for matching data of the map information according to the first embodiment;
Fig. 5 is a conceptual diagram schematically showing a table structure for data in a traffic-congestion prediction table according to the first embodiment;
Fig. 6 is a conceptual diagram schematically showing a table structure for data in a calendar template according to the first embodiment;
Fig. 7 is a block diagram showing the brief configuration of a processor of the navigation device according to the first embodiment;
Fig. 8 is a flowchart showing a processing for modifying the calendar template according to the first embodiment;
Fig. 9 is a conceptual diagram schematically showing the table structure for the data in the calendar template updated by a calendar modifier according to the first embodiment;
Fig. 10 is a flowchart showing a processing for searching for a travel route according to the first embodiment;
Fig. 11 is a flowchart showing a processing for notifying departure guidance according to the first embodiment;
Fig. 12 is a block diagram showing the brief configuration of a navigation system according to a second embodiment of the present invention;
Fig. 13 is a block diagram showing the brief configuration of a terminal unit according to the second embodiment;
Fig. 14 is a block diagram showing the brief configuration of a processor of the terminal unit according to the second embodiment;
Fig. 15 is a block diagram showing the brief configuration of a server according to the second embodiment;
Fig. 16 is a block diagram showing the brief configuration of a CPU of the server according to the second embodiment;
Fig. 17 is a flowchart showing a processing for modifying a calendar template according to the second embodiment;
Fig. 18 is a flowchart showing a processing for searching for a travel route according to the second embodiment; and
Fig. 19 is a flowchart showing a processing for notifying departure guidance according to the second embodiment.

### [First Embodiment]

Now, a first embodiment of the present invention will be described with reference to the attached drawings. A navigation device of this embodiment is an example of a guiding device of the present invention, which is designed to navigate drive of a mobile body (e.g. a vehicle) as a traveling condition. The guiding device of the present invention is not limited to a configuration for guiding drive of a vehicle, but may also includes any configuration for notifying guidance regarding travel for arriving at a destination such as a portable type carried by a user.

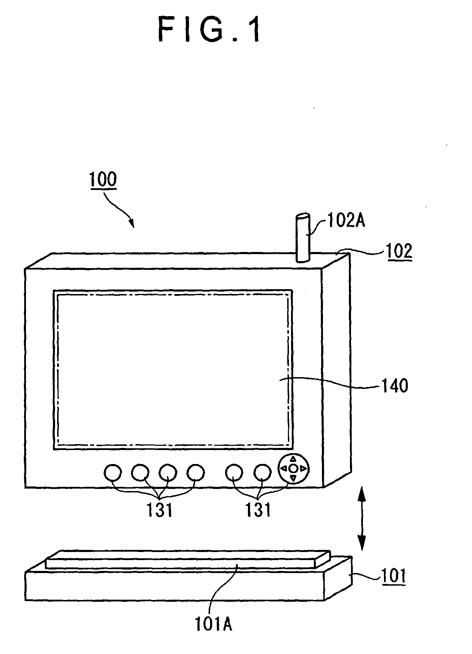

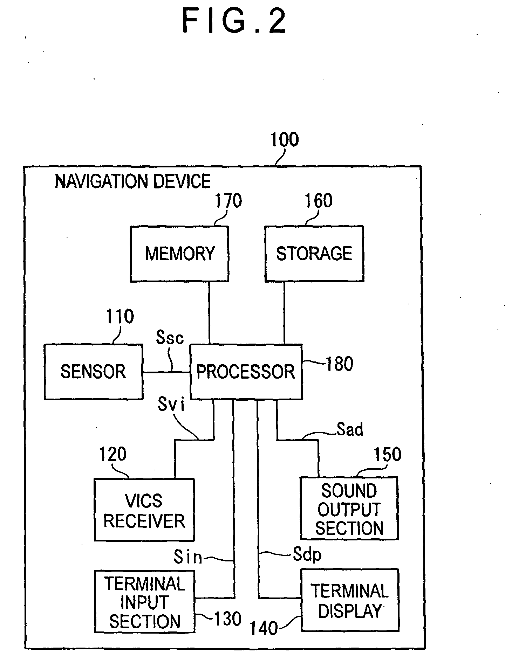

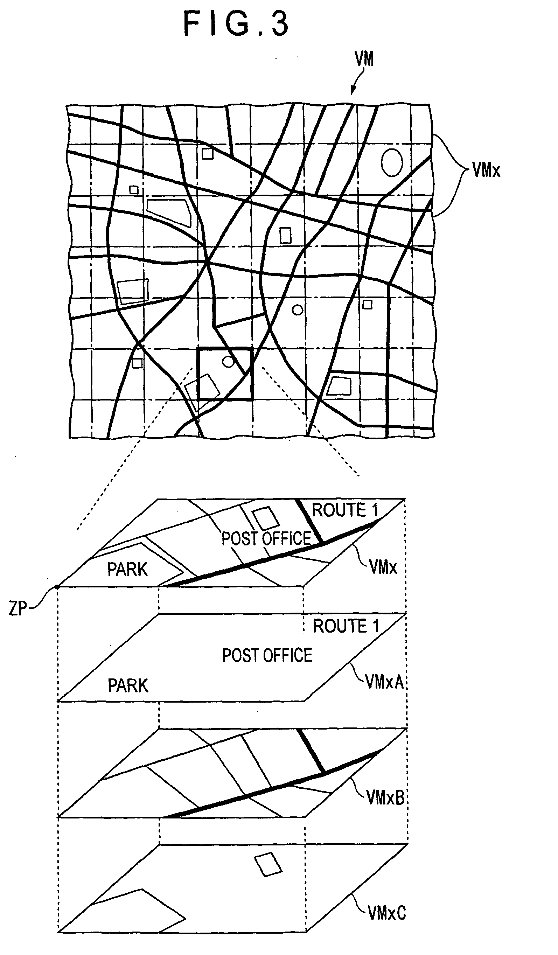

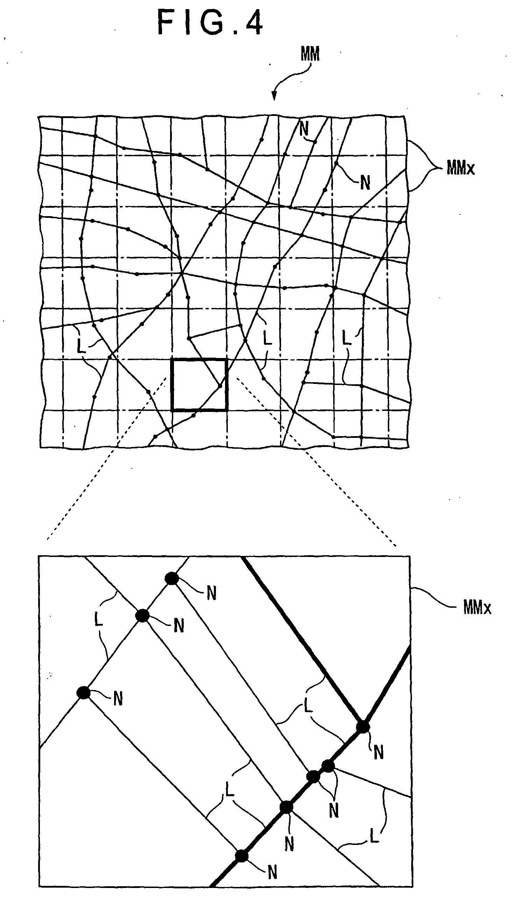

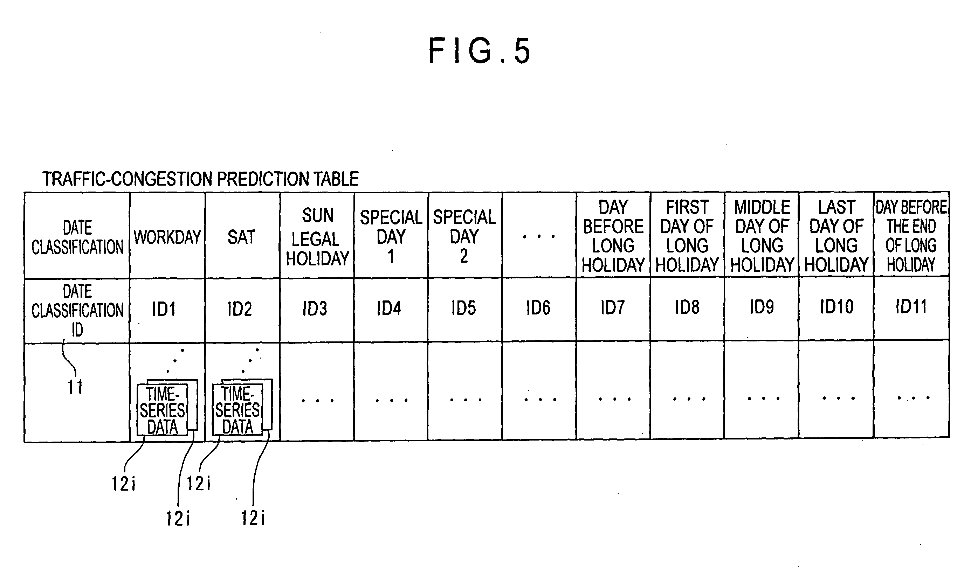

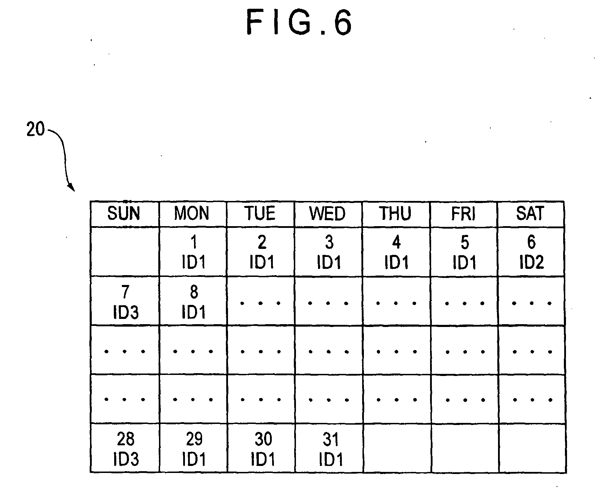

Fig. 1 is an exploded perspective view showing the brief configuration of the navigation device according to the first embodiment. Fig. 2 is a block diagram showing the brief configuration of the navigation device. Fig. 3 is a conceptual diagram schematically showing a table structure for display data of map information. Fig. 4 is a conceptual diagram schematically showing a table structure for matching data of the map information. Fig. 5 is a conceptual diagram schematically showing a table structure for data in a traffic-congestion prediction table. Fig. 6 is a conceptual diagram schematically showing a table structure for data in a calendar template.

### [Configuration of Navigation Device]

Referring to Fig. 1, the reference numeral 100 denotes the navigation device (guiding device). The navigation device 100 notifies guidance on a travel along with a traveling condition of a mobile body (e.g. a vehicle). The mobile body is not limited to a vehicle, but includes any types of mobile body such as an aircraft and a ship. The navigation device 100 may be, for example, an in-vehicle unit installed in a vehicle as a mobile body, a portable unit, a PDA (Personal Digital Assistant), a mobile phone, a PHS (Personal Handyphone System) or a portable personal computer. The navigation device 100 searches for and displays information about a current-position and a destination, a route to the destination, predetermined shops nearby, and information about service offered by the shops on the basis of map information owned by the navigation device 100.

As shown in Fig. 1, the navigation device 100 has a base 101 installed on the vehicle and a main body 102 removably attached on the base 101. The power is supplied to the base 101 from the vehicle. The base 101 has a connector section 101A with a terminal post (not shown) for supplying the power. The main body 102 is removably connected to the connector section 101 A of the base 101 and is operated with the power supplied from the base 101. As shown in Fig. 2, the navigation device 100 has a not-illustrated power section, a sensor 110 as a departure waiting state recognizer, a VICS (Vehicle Information Communication System) receiver 120 as a traffic information acquirer, a terminal input section 130 functioning as a request signal generator, a terminal display 140 as a display section constituting a notifying section, a sound output section 150 constituting a notifying section, a storage 160, a memory 170, a processor 180 and so on as the components of the main body 102.

The power section such as an accumulator battery stores the power supplied from the connector section 101A of the base 101 and appropriately operates each component by supplying the power. The power section is not limited to the accumulator battery, and various types of batteries such as and a dry battery, a fuel battery and a solar battery are applicable.

The sensor 110 has a terminal post removably connected to the not-illustrated terminal post provided on the connector section 101A of the base 101, and detects the traveling condition of a vehicle as a mobile body, i.e. the current-position and the driving status, and outputs it as a predetermined signal Ssc to the processor 180. The sensor 110 detects a departure waiting state as a state whether or not the vehicle can depart immediately, and outputs it as a predetermined signal Ssc to the processor 180. More specifically, the departure waiting state is the state whether or not the vehicle can start immediately, such as a driving state of an engine as an internal combustion engine of the vehicle (a state whether or not the engine is driven), a power supply state of an accessory power by an operation key for starting the engine of the vehicle (whether or not the power is supplied from a battery installed on the vehicle through the base 101), a connection state between the base 101 and the main body 102 (whether or not the main body 102 is connected to the base 101), and whether or not a driver is on board. The sensor 110, for instance, has a not-shown GPS (Global Positioning System) receiver and not-shown various sensors such as a speed sensor, an azimuth sensor, an acceleration sensor, and a departure waiting state detector.

The GPS receiver receives electric navigation waves output from a GPS satellite (not shown), which is an artificial satellite, via, for example, an antenna section 102A shown in Fig. 1. Then, the GPS receiver calculates simulated coordinate values of the current-position on the basis of a signal corresponding to the received electric navigation waves and outputs the calculated coordinate values as a GPS data to the processor 180.

The speed sensor of the sensor 110 is arranged on a mobile body (e.g. a vehicle) so as to detect the driving speed and the actual acceleration of the vehicle on the basis of a signal that varies depending on the driving speed, or the traveling speed, of the vehicle. The speed sensor reads a pulse signal, a voltage value and the like output in response to the revolution of the axles and the wheels of the vehicle. The speed sensor outputs detection information such as the read pulse signal and the voltage value to the sensor 110 through the connector section 101A of the base 101, and the sensor 110 appropriately outputs it to the processor 180. The azimuth sensor is arranged on the vehicle and provided with a so-called gyro-sensor (not shown) so as to detect the azimuth of the vehicle, i.e., the driving direction to which the vehicle is heading. The azimuth sensor outputs a signal representing detection information about the detected driving direction to the sensor 110 through the connector section 101A of the base 101, and the sensor 110 appropriately outputs it to the processor 180. The acceleration sensor is arranged on the vehicle so as to detect the acceleration of the vehicle in the driving direction thereof. The acceleration sensor converts the detected acceleration into a sensor output value, which is detection information such as the pulse and the voltage and outputs the value to the sensor 110 through the connector section 101A of the base 101, and the sensor 110 appropriately outputs it to the processor 180.

The departure waiting state detector has a connection detector (not shown) arranged on the base 101 for detecting an electrical and mechanical connection state of the main body to the connector section, a power detector for detecting whether or not the power is supplied to the terminal post for supplying the power of the connector section, a person detector for detecting whether or not the driver is on board and so on. The departure waiting state detector acquires signals regarding a departure ready state such as a signal output from the connection detector and indicating that the connection is established, a signal output from the power detector and indicating that the power is supplied, and a signal indicating that the driver is on board, and appropriately outputs the signals to the processor 180. The departure waiting state detector is not limited to the configuration where the connection detector, the power detector and the person detector are provided, and includes any configuration matching with contents of the departure waiting state to be detected. The configuration for detecting at least any one of the above departure waiting states or for additionally detecting other departure waiting state may be applicable.

The VICS receiver 120 has a VICS antenna (not shown) and acquires traffic information via the VICS antenna. More specifically, the VICS receiver 120 acquires traffic information (hereinafter referred to as VICS data) about traffic-congestion, traffic accidents, constructions, traffic controls and so on from the VICS (not shown) with the use of, for example, the antenna section 102A by way of a beacon, FM multiplex broadcasting or the like. The acquired traffic information is output as a predetermined signal Svi to the processor 180.

The VICS data has a table structure typically containing a plurality of following conceptual items formed as a set of data.
· traffic-congestion rating: congested, crowded, smooth, etc.
· top position of traffic-congestion
· length of traffic-congestion
. link travel time information: travel time required for a vehicle to pass through a VICS link (distance between intersections)
. zone travel time information: travel time required for a vehicle to pass through a predetermined zone longer than a VICS link
· information about traffic controls, causes thereof, controlled areas
· information about vacancies in parking areas
· information about rest areas and parking areas
· other information

The terminal input section 130, which may be a keyboard, a mouse or the like, has various operation buttons 131 shown in Fig. 1 and operation knobs to be used for input operations. The operation buttons 131 and the operation knobs are used to input, for example, the setting items for setting the operation contents of the navigation device 100. More specifically, the setting items may include setting of information contents as well as its condition to be acquired, setting of a destination, information retrieval, setting of displaying the driving status (traveling condition) of the vehicle, setting of switching the display, setting of scheduled time to arrive at the destination, and setting of timing for notifying guidance regarding the travel of the vehicle. When the settings are input, the terminal input section 130 outputs a predetermined signal Sin to the processor 180 so as to apply the settings. In place of the operation buttons and the operation knobs, the terminal input section 130 may include any types of input unit such as a touch panel that may be arranged at the terminal display 140, a sound input section for the input operations thereof, a configuration where the signal Sin is output via a radio medium such as a remote controller as long as various setting items can be input.

The terminal display 140, under the control of the processor 180, displays a signal Sdp representing image data sent from the processor 180. The image data may be those representing map information and retrieval information, TV image data received by a TV receiver (not shown), those stored in an external device or recording medium such as an optical disc, a magnetic disc or a memory card and read by a drive or a driver, and those in the memory 170. The terminal display 140 may typically be a liquid-crystal display panel, an organic EL (Electro Luminescence) panel, a PDP (Plasma Display Panel), a CRT (Cathode-Ray Tube), a FED (Field Emission Display), or an electrophoretic display.

The sound output section 150 has a sound generator such as a speaker (not shown). The sound output section 150, under the control of the processor 180, outputs various signals Sad as sounds from the sound generator. The various signals Sad represent the sound data etc. from the processor 180. Information output as sounds, which may be the driving direction, the driving status, the traffic condition and the like of the vehicle, are notified to the driver and other occupants for guiding the drive of the vehicle and for guiding the travel to the destination. The sound generator may output a TV sound data received by a TV receiver (not shown) and sound data stored in a recording medium or the memory 170. In place of the sound generator, the sound output section 150 may use a sound generator equipped on the vehicle.

The storage 160 readably stores map information as shown in Figs. 3 and 4 and a traffic-congestion prediction table 10 as shown in Fig. 5. Although not shown, the storage 160 includes a map information storage area for storing the map information and a traffic-congestion prediction table storage area for storing the traffic-congestion prediction table 10. While the storage 160 has the above-mentioned two storage areas in this embodiment, the storage 160 may not have any of the above-mentioned storage areas, or may have additional storage areas. The storage 160 may include drives or drivers for readably storing data on a recording medium such as a HD (Hard Disk), a DVD (Digital Versatile Disc), an optical disc and a memory card.

The map information includes display data VM, which is so-called POI (Point Of Interest) data as shown in Fig. 3, matching data MM as shown in Fig. 4, route search map information and the like.

The display data VM includes, for example, a plurality of display mesh information VMx, each having a unique number. To be more specific, the display data VM is divided into a plurality of display mesh information VMx, each relating to an area. The display data VM is constituted from the plurality of display mesh information VMx continuously arranged in a matrix form. The display mesh information VMx may be further divided into a plurality of display mesh information VMx to be contained in a lower layer, each relating to a smaller area. Each display mesh information VMx has a rectangular shape with each side thereof having a predetermined length, which is reduced relative to the actual geographic length according to the map scale. A predetermined corner thereof contains absolute coordinates ZP in the whole map information, e.g., a global map.

The display mesh information VMx is, for instance, constituted from name information VMxA such as intersection names, road information VMxB and background information VMxC. The name information VMxA is data structured in a table for arranging and displaying miscellaneous element data (e.g. intersection name, town name) contained in an area at a predetermined position with reference to the positional relationship based on the absolute coordinates ZP. The road information VMxB is data structured in a table for arranging and displaying road element data (e.g. road) contained in an area at a predetermined position with reference to the positional relationship based on the absolute coordinates ZP. The background information VMxC is data structured in a table for arranging and displaying miscellaneous element data (e.g. mark and image information representing famous spots and buildings) at a predetermined position with reference to the positional relationship based on the absolute coordinates ZP.

The matching data MM, just like the display data VM, is divided into a plurality of matching mesh information MMx, each having a unique number and relating to an area. The matching data MM is constituted from the plurality of matching mesh information MMx continuously arranged in a matrix form. The matching mesh information MMx may be further divided into a plurality of matching mesh information MMx to be contained in a lower layer, each relating to a smaller area. Each matching mesh information MMx has a rectangular shape with each side thereof having a predetermined length, which is reduced relative to the actual geographic length according to the map scale. A predetermined corner thereof contains absolute coordinates ZP in the whole map information, e.g., a global map. The matching mesh information MMx and the display mesh information VMx may not necessarily represent the same area. That is, they may be divided according to different scales. If the same scale is used, unique number information may be used for associating the data. If a different scale is used, the absolute coordinates may be used for associating the data.

The matching data MM is used for the map matching processing for correcting the displayed information to locate a mark representing the vehicle on a road, when the traveling condition of the vehicle is superimposed on the map information. This processing prevents such errors that the mark representing the vehicle is displayed on a building instead of the road. The matching data MM has a plurality of link string block information.

As shown in Fig. 4, the link string block information is data structured in a table so that a plurality of links L are mutually associated according to a predetermined rule. The link L as segment information represents a road and connects nodes N as the point information. Specifically, the links L each corresponding to a predetermined segment of a road are mutually connected like a line as a link string, which represents a continuous road such as Koshu street and Ome street. Each link L has unique segment information (hereafter referred to as a link ID) as a unique number assigned to each link L, and node information as a unique number indicating two nodes N connected by the link L. Each link L is associated with a VICS link, so that the positional relationship between the VICS data and the displayed map can be corresponded with each other.

Each node N represents a joint point such as an intersection, a corner, a fork, a junction or the like of each road. Information about the node N has unique point information as a unique number assigned to each node N in the link string block information, coordinate information of the position where each node N is located, and flag information as branching information describing whether the node N represents a branching position (e.g. intersection, fork) where a plurality of links are crossed or not. Some nodes N may only have the unique point information and the coordinate information without the flag information for simply representing the shape of a road, while some nodes N may additionally have attribute information representing the road structure such as width of a tunnel or a road. The nodes N without the flag information for simply representing the road shapes are not used when a coordinate matching section 186 (which will be described later) determines whether or not the points are identical.

The route search map information is structured in a table, which is similar to that of the matching data MM, including the point information for representing points such as the nodes N representing roads, and the segment information for connecting points such as the links L. The information is so structured to represent roads for searching for the travel route.

The traffic-congestion prediction table 10, which includes statistical traffic information obtained by statistically processing the past traffic conditions based on time factors, is a set of data for showing traffic conditions in the past at an arbitrary location. The traffic-congestion prediction table 10 is used to predict traffic-congestion at the processing for travel route search and the processing for displaying a map. The traffic-congestion prediction table 10, as shown in Fig. 5, stores a plurality of records, each single record containing a date classification ID (identification) 11, time-series data 12i (i representing a natural number) and the like.

The date classification ID 11 is typically an ID number representing a classification of date of the year and day of the week. In the following description, classification of date of the year and day of the week will be referred to as date classification. For example, "ID1" may indicate any "workday" such as Monday to Friday excluding legal holidays; "ID2" may indicate "Saturday" excluding legal holidays; "ID4" may indicate "special day 1" such as a festival day of City A; "ID5" may indicate "special day 2" such as a day when a sports meeting is held at Athletic Ground B; "ID7" may indicate "the day before a long holiday" such as the day before four consecutive holidays; and "ID 11" may indicate "the day before the end of a long holiday" such as the third day of four consecutive holidays. The date classification ID 11 is not limited to the ID number, but may alternatively be a text data directly related to a day such as "workday".

The time-series data 12i is data on the tendency of traffic-congestion of the traffic conditions. For example, a VICS data may be acquired from the VICS and stored for each VICS link, and then statistically processed for every 10 minutes based on the time factor of the stored VICS link (i.e., date classification) so as to be used as the time-series data 12i. In other words, the time-series data 12i is data representing conditions of traffic-congestion at desired locations (which might be each VICS link) for every predetermined time, such as the length of the traffic-congestion, the traffic-congestion ratings and the time required for passing through the traffic-congestion. While the time-series data 12i described above is data generated by statistically processing the data for each location based on the time factor, it may alternatively be generated for each facility, shop, area, city and town, or road.

The storage 160, for instance, stores the retrieval information for acquiring information of a predetermined point in the map information. More specifically, the retrieval information includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The memory 170 readably stores the settings that are input by the terminal input section 130, a music data and an image data as well as a plurality of calendar templates 20 as shown in Fig. 6. The memory 170 also stores various programs that run on the OS (Operating System) controlling the whole operation of the navigation device 100. The memory 170 may preferably be a CMOS (Complementary Metal-Oxide Semiconductor) memory that retains the stored data even in the case of a sudden power interruption caused by a blackout. The memory 170 may include drives or drivers for readably storing data on a recording medium such as a HD, a DVD, and an optical disc.

The calendar template 20 is a template representing a date classification of each date. More specifically, the calendar template 20 is a table, where a plurality of table data for every month, typically twelve table data, are stored. The respective table data have a plurality of records, each containing date information about date, classification ID numbers assigned to respective dates of the date information.

The classification ID number is identical to one of the date classification IDs 11 in the traffic-congestion prediction table 10 and indicates the date classification of the date specified by the date information. For example, Friday 5th is classified as "workday" associated with "ID 1", and Monday 15th is classified as "legal holiday" associated with "ID3". The classification ID number of the calendar template 20 can be modified by the processor 180 if necessary. The classification ID number is not limited to numerical values, but may alternatively be a text data (e.g. "workday") corresponding to the date classification ID in the traffic-congestion prediction table 10.

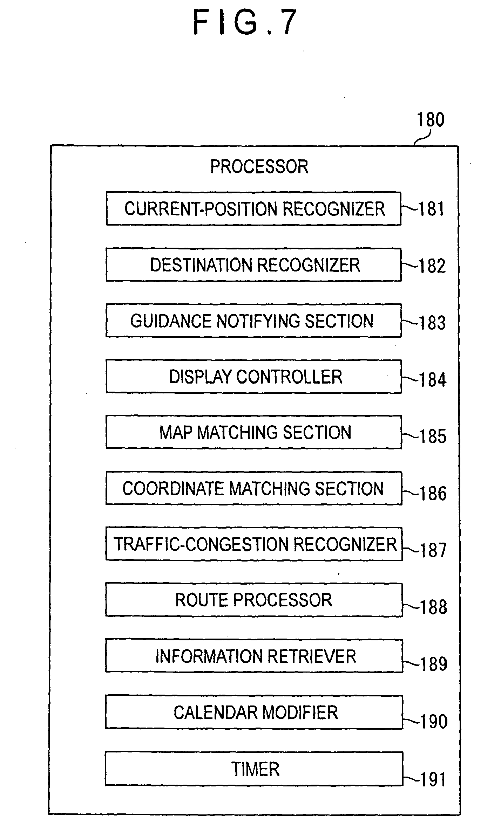

The processor 180 has various input/output ports (not shown) including a VICS receiving port connected to a VICS antenna, a GPS receiving port connected to a GPS receiver, sensor ports respectively connected to various sensors, a key input port connected to the terminal input section 130, a display control port connected to the terminal display 140, a sound control port connected to the sound output section 150, a storage port connected to the storage 160 and a memory port connected to the memory 170. As shown in Fig. 7, the processor 180 has various programs such as a current-position recognizer 181 (current-position information acquirer) functioning as a terminal position recognizer, a destination recognizer 182 (destination information acquirer), a guidance notifying section 183 functioning as a notification information generator and a notification controller, a display controller 184 functioning as the notification information generator and the notification controller, a map matching section 185, a coordinate matching section 186, a traffic-congestion recognizer 187, a route processor 188 (a travel route setting section) functioning as a map information acquirer, a scheduled time information acquirer, a predicted required time calculator and a terminal arrival time calculator, an information retriever 189, a calendar modifier 190, a timer 191 and so on.

The current-position recognizer 181 recognizes the current-position of the vehicle. More specifically, it calculates a plurality of current simulated positions of the vehicle on the basis of the speed data and the azimuth data of the vehicle output respectively from the speed sensor and the azimuth sensor of the sensor 110. The current-position recognizer 181 further recognizes the current simulated coordinates values of the vehicle on the basis of the GPS data about the current-position output from the GPS receiver of the sensor 110. Then, the current-position recognizer 181 compares the calculated current simulated positions with the recognized current simulated coordinates values, and calculates the current-position of the vehicle on map information separately acquired so as to recognize the current-position.

The current-position recognizer 181 determines a slope angle and an altitude of a drive road on the basis of the acceleration data output from the acceleration sensor and calculates the current simulated position of the vehicle so as to recognize the current-position. Thus, the current-position of the vehicle can be accurately recognized even if the vehicle is on an intersection with an overpass or on an elevated highway where roads are overlaid in a two-dimensional view. Furthermore, when the vehicle runs on a mountain road or a slope, the current-position recognizer 181 corrects the difference between the travel distance obtained only on the basis of the speed data and the azimuth data and the actual driving distance of the vehicle by using the detected slope angle of the road to accurately recognize the current-position.

The current-position recognizer 181 can recognize not only the current-position of the vehicle as described above but also a starting point, i.e. an initial point set by the terminal input section 130 as the current simulated position. The current-position recognizer 181 also recognizes the current-position detected immediately before separating the main body 102 from the base 101 as the vehicle position based on the signal output from the sensor 110. Various information acquired by the current-position recognizer 181 are appropriately stored in the memory 170.

The destination recognizer 182, for instance, acquires the destination information about the destination set by the input operation at the terminal input section 130 and recognizes the position of the destination. The destination information to be set includes various information for identifying a location, which might be coordinates such as latitude and longitude, addresses, telephone numbers and the like. Such destination information recognized by the destination recognizer 182 is appropriately stored in the memory 170.

The guidance notifying section 183 provides guidance stored in the memory 170 in visual form by using the terminal display 140 or in audio form by using the sound output section 150 on the basis of travel route information and feature guidance information acquired in advance according to the driving status. The guidance is related to the travel of the vehicle, for instance, the contents for assisting the drive of the vehicle. For example, a predetermined arrow and a sign may be displayed on the screen of the terminal display 140, or voice guidance such as "Turn right toward XX at the intersections of YY 700m ahead", "The vehicle is off the travel route" or "Traffic-congestion is ahead" may be provided from the sound output section 150. The guidance notifying section 183 generates departure notification information for encouraging the departure of the vehicle, and notifies the information in visual form by using the terminal display 140 or in audio form by using the sound output section 150. The departure notification information to be notified may be, for example, the departure time displayed on the screen of the terminal display 140, or voice guidance such as "Soon will be the time to leave", "Please leave at XX:XX" and "Please leave in XX minutes" provided.

The display controller 184 controls the terminal display 140 and makes the terminal display 140 display various information on a screen for notifying the user. Additionally, the display controller 184 displays various screens for prompting a user to operate the terminal input section 130 so as to set various information.

The map matching section 185 performs the map matching processing for displaying the current-position recognized by the current-position recognizer 181 based on the map information obtained from the storage 160. As described earlier, the map matching section 185 typically uses the matching data MM for performing the map matching processing to modify or correct the current-position information to prevent the current-position superimposed on the map on the terminal display 140 from being located off the road as an element of the map displayed on the terminal display 140.

The coordinate matching section 186 performs the coordinate matching processing for determining if point information about nodes N contained in the matching data MM of the map information acquired from the storage 160 indicate an identical point or not. In other words, as described earlier, the coordinate matching section 186 acquires point information of nodes N contained in the matching data MM and reads the coordinate information of the point information. More specifically, the coordinate matching section 186 calculates the coordinate values such as the latitude and the longitude on the basis of information on the coordinate values of the coordinate information and the offset amount. If different nodes N have identical coordinate values, it reads the flag information of the point information of the nodes N to determine whether the nodes N represent the identical point. If the coordinate matching section 186 determines that the nodes N are identical, it recognizes that the links L respectively connected to the nodes N and contained in the different link string block information are crossed with each other, and thus considers as, for example, an intersection. If, on the other hand, the coordinate matching section 186 determines that the nodes N are not identical, it recognizes that the links L respectively connected to the nodes N and contained in the different link string block information are not crossed with each other, and thus considers as, for example, a multi-level intersection.

The traffic-congestion recognizer 187 generates current traffic-congestion information about the traffic-congestion that is currently present. More specifically, the traffic-congestion recognizer 187 appropriately acquires the VICS data from the VICS output from the VICS receiver 120. Then, it generates current traffic-congestion information about the traffic-congestion which is currently present in an area including, for example, the current-position and the destination or in a predetermined area around the current-position based on the acquired VICS data.

Additionally, the traffic-congestion recognizer 187 calculates the predicted arrival time as a predicted time to arrive at a desired destination. For example, firstly the traffic-congestion recognizer 187 calculates the predicted arrival time as the predicted time to arrive at the desired destination. Then based on the calculated predicted arrival time, a preset scheduled time set in advance, and the time-series data 12i, the traffic-congestion recognizer 187 generates traffic-congestion prediction information about the predicted condition of the traffic-congestion that may arise at any locations before arriving at the destination or by the preset scheduled time.

More specifically, the traffic-congestion recognizer 187 recognizes the classification ID number of the date for which traffic-congestion prediction will be performed on the basis of the time information acquired from the timer 191 and the calendar template 20. Then, the traffic-congestion recognizer 187 retrieves and acquires the time-series data 12i for the area corresponding to the recognized classification ID number and including the current-position and the destination from the traffic-congestion prediction table 10. After that, based on the current traffic-congestion information and the current time acquired from the timer 191, the traffic-congestion recognizer 187 calculates the predicted arrival time to arrive at a desired location on a candidate travel route specified by candidate travel route information (which will be described later) generated by the route processor 188.

The predicted arrival time may be calculated with a method below, for example. Firstly, the distance to a desired location on the candidate travel route is recognized based on the candidate travel route information, and the time required to travel the recognized distance is calculated based on the current traffic-congestion information. Subsequently, the predicted arrival time is calculated on the basis of the calculated required time and the current time. Then, traffic-congestion prediction information is generated on the basis of the time-series data 12i and the predicted arrival time.

The route processor 188 searches for a travel route by calculating the driving route as the travel route of the vehicle on the basis of the setting information that is set by a user for setting the route as well as the map information stored in the storage 160. The route processor 188 can calculate the travel route by taking the current traffic-congestion information and the traffic-congestion prediction information generated by the traffic-congestion recognizer 187 into consideration when the processor 180 recognizes traffic-congestion prediction request information requesting a travel route search with the traffic-congestion information and the traffic-congestion prediction considered.

More specifically, if the setting information does not contain the traffic-congestion prediction request information, the route processor 188 acquires the current-position, the destination, the setting information and the current traffic-congestion information. Then, based on the acquired information, the route processor 188 searches for available roads, where for example traffic is allowed, using the route search map information of the map information, and generates travel route information for setting a route with a shorter required time to arrive at the destination, a route with a shorter travel distance, or a route without traffic-congestion and traffic controls. After that, it calculates the predicted required time to arrive at the destination from the current-position as a departure point for each of the routes contained in the travel route information and generates required time information about the predicted required time.

If, on the other hand, the setting information contains the traffic-congestion prediction request information, the route processor 188 acquires the current-position, the destination, the setting information, the current traffic-congestion information, and the traffic-congestion prediction information. Then, based on the acquired information, it generates candidate travel route information for setting a route with shorter required time to arrive at the destination, a route with shorter travel distance, or a candidate route without traffic-congestion and traffic controls. After that, based on the current traffic-congestion information and the traffic-congestion prediction information, the number of the candidate route contained in the candidate travel route information is reduced to generate travel route information for setting a route etc.

It the step for searching for the travel route, the route processor 188 might use the matching data MM of the map information in addition to the route search map information. This applies to, for instance, the case where the route processor 188 searches for the travel route including a narrow road such as a back street not contained in the route search map information. When the matching data MM is used, the route is appropriately searched according to recognition on the road arrangement recognized by the coordinate matching section 186. The travel route information includes, for example, the route guidance information for navigating the vehicle to assist the drive thereof. The route guidance information may be appropriately displayed on the terminal display 140 or output as sounds from the sound output section 150 to assist the drive.

The route processor 188 calculates a predicted position where the vehicle arrives after a predetermined period of time being elapsed, and calculates the elapsed time and the time until the vehicle arrives at the predicted position based on the current-position information, travel route information and the map information of the vehicle to generate predicted position information and predicted arrival time information. The route processor 188 calculates the predicted required time to arrive at the destination from the current-position as the departure point, and calculates the departure time of the departure point to arrive at the destination at the scheduled time to generate the departure time information based on the predicted required time information and scheduled time information about scheduled time to arrive at the destination set in the setting information. The predicted position information, the predicted arrival time information and the departure time information are appropriately stored in the memory 170 together with the travel route information.

The information retriever 189 hierarchically retrieves and acquires the retrieval information, such as shops and facilities, stored in the storage 160 on the basis of the item information in response to, for example, a retrieval request for the retrieval information set at the terminal input section 130.

The calendar modifier 190 appropriately updates the calendar template 20 stored in the memory 170 on the basis of modifications set by the user. More specifically, the calendar modifier 190 recognizes various information set by the input operations of the user at the terminal input section 130. The set information may include date information for specifying date and event information about events such as festivals and sports meeting. Then, the calendar modifier 190 recognizes the date specified by the date information, and also recognizes the classification ID number associated with the event information. The classification ID number may be typically recognized as follows. The date classification is determined based on the set event information, and the classification ID number is recognized based on the determined date classification. If, for example, the event information relates to a sports meeting to be held at Athletic Ground B, the date classification is determined as "special day 2", and the classification ID number is recognized as "ID5" based on the "special day 2". If the event information relates to the last day of five consecutive holidays, the date classification is recognized as "the last day of a long holiday", and then the classification ID number as "ID10" based on the "last day of a long holiday". Then, the calendar modifier 190 appropriately updates the calendar template 20 on the basis of the recognized date and the classification ID number.

The timer 191 recognizes the current time typically based on the reference pulse of an internal clock. Then, the timer 191 appropriately outputs time information about the recognized current time.

### [Operation of Navigation Device]

Now, the operation of the navigation device 100 will be described with reference to the drawings.

### (Calendar Template Modifying Process)

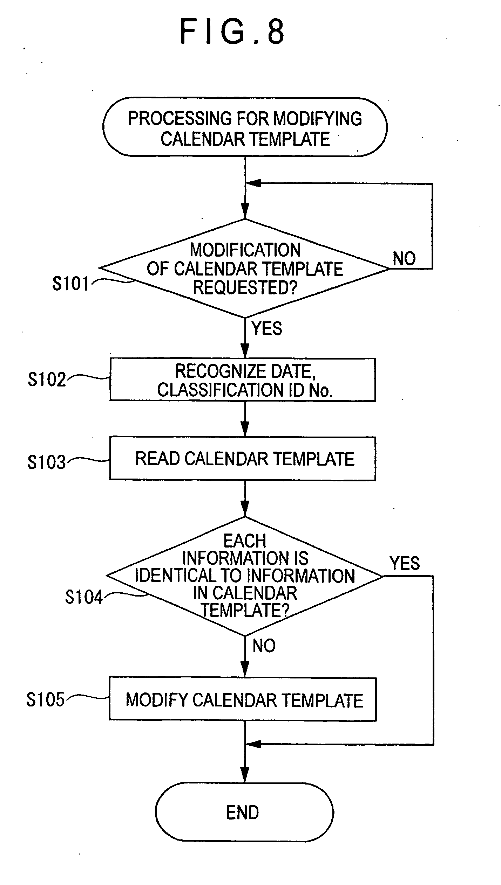

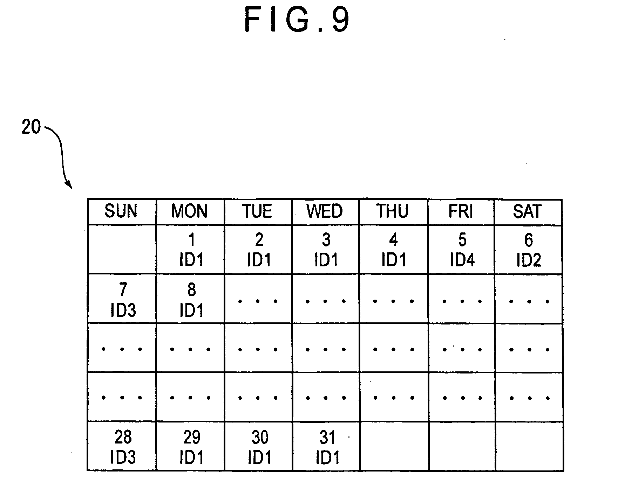

Firstly, the processing for modifying the calendar template 20 as one of the operations of the navigation device 100 will be described with reference to Figs. 8 and 9. Described herein is the processing for modifying the calendar template 20 as shown in Fig. 5 based on the information about, for example a festival scheduled on 5th in City A, that a user have recognized from the radio or TV broadcastings, printed information sources such as newspapers and official publications or acquired by connecting his or her mobile phone via the mobile phone line. Fig. 8 is a flowchart showing the processing for modifying a calendar template. Fig. 9 is a conceptual diagram schematically showing the table structure for the data in the calendar template updated by the calendar template modifier.

Firstly, the user in the vehicle switches on the navigation device 100 to supply the power thereto. When the power is supplied, the processor 180 controls the terminal display 140 to display a main menu and a screen for prompting the user to set a specific operation to be executed by the navigation device 100.

Then, as shown in Fig. 8, the user operates the terminal input section 130 to set a command for modifying the calendar template 20. When the processor 180 recognizes the set command for modifying the calendar template 20 at the calendar modifier 190 (step S101), it makes the terminal display 140 display a screen for prompting the user to set the date information and the event information necessary for modifying the calendar template 20.

When the user sets the date information and the event information by operating the terminal input section 130 following the instructions on the displayed screen, the calendar modifier 190 acquires the set date information and the event information. The user may set the date information and the event information by inputting characters thereof or selecting from a plurality of candidates displayed on the terminal display 140. Alternatively, a following method may be used. Firstly, the user selects a date by operating the terminal input section 130 and moving a flashing cursor displayed in or around the area of a date in the calendar template 20 as shown in Fig. 5. Then, the user sets the event information of the selected date by inputting characters or by selecting from a plurality of event information being displayed.

After acquiring the date information and the event information, the calendar modifier 190 recognizes the acquired various information (step S102). More specifically, the calendar modifier 190 recognizes the date specified by the date information and the classification ID number associated with the event information. In this example, the calendar modifier 190 recognizes the date specified by the date information as 5th. Also, it determines the date classification associated with the event information as "special day 1" for a festival to be held in City A, and recognizes the classification ID number as "ID4" based on the determined date classification.

Thereafter, the calendar modifier 190 reads out the calendar template 20 stored in the memory 170 (step S103). Then, the calendar modifier 190 determines if the information recognized in step S102 is identical to the information in the calendar template 20 read in step S103 or not (step S104). More specifically, it recognizes the classification ID number associated with the date recognized in step S102 based on the read calendar template 20. Then, it determines if the classification ID number recognized based on the calendar template 20 is identical to the classification ID number recognized in step S102 or not.

If the calendar modifier 190 determines in step S104 that the classification ID numbers are identical, it ends the processing without modifying the calendar template 20. If, on the other hand, the calendar modifier 190 determines that the classification ID numbers are not identical, it modifies the calendar template 20 on the basis of the various information recognized in step S102 (step S105) and ends the processing. More specifically, since the classification ID number of the 5th recognized in step S102 is "ID4" and the classification ID number of the 5th recognized based on the calendar template 20 is "ID1", the calendar modifier 190 changes the classification ID number of the 5th from "ID1" to "ID4" as shown in Fig. 9 and ends the processing.

### (Processing for Travel Route Search)

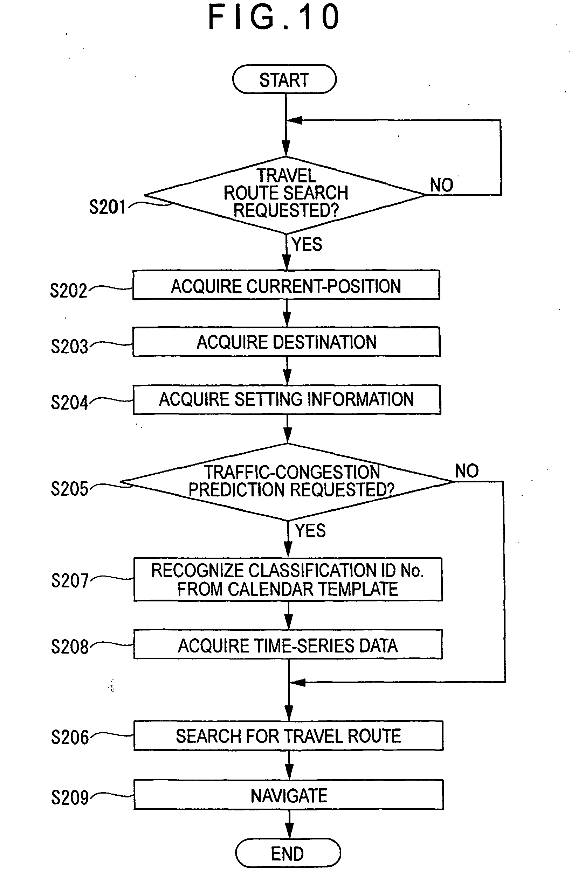

Now, the processing for travel route search as one of operations of the navigation device 100 will be described with reference to Fig. 10. Fig. 10 is a flowchart showing the processing for searching for a travel route in the navigation device.

Firstly as shown in Fig. 10, the user operates the terminal input section 130 to set a command for searching for a travel route. With this setting, a request signal for requesting the travel route is generated. When the route processor 188 of the processor 180 recognizes the request signal by the setting for searching for a travel route (step S201), the processor 180 makes the terminal display 140 display a screen for prompting the user to set various information necessary for travel route search such as the setting information including the destination, the setting information about the preference for shortest travel distance or shortest travel time and necessity of the traffic-congestion prediction.

When the processor 180 recognizes the various information necessary for the travel route search by the route processor 188, the current-position recognizer 181 recognizes the current-position (step S202) and the destination recognizer 182 recognizes the set destination (step S203). Specifically, the current-position recognizer 181 calculates the current-position of the vehicle on the basis of the speed data and the azimuth data of the vehicle respectively output from the speed sensor and the azimuth sensor of the sensor 110 and the GPS data about the current-position output from the GPS receiver, and acquires the current-position information. The acquired current-position information is appropriately stored in the memory 170.

The processor 180 controls the terminal display 140 by the display controller 184 to display a screen for prompting the user to set the destination with the input operation at the terminal input section 130. Then, when the user sets the destination by operating the terminal input section 130 following the instructions on the displayed screen, the destination recognizer 182 acquires the destination information about the set destination. The acquired destination information is appropriately stored in the memory 170.

If the user requests to acquire point information about a point of the destination in the step of inputting the destination by operating the terminal input section 130, the user operates the terminal input section 130 so as to request the retrieval information of the point following the instructions on the screed displayed on the terminal display 140. In response to the retrieval request for the retrieval information of the point, the processor 180 makes the information retriever 189 hierarchically retrieve the retrieval information about the destination from the mesh information at the lower layers for each area, typically using the map information and acquire the retrieval information associated with the point of the destination from the storage 160. Then, the processor 180 controls the terminal display 140 to display the acquired retrieval information.

If the retrieval information requires to display map information of a predetermined area containing the destination or if the user who has recognized the retrieval information operates the terminal input section 130 to display a predetermined area, the processor 180 appropriately controls the terminal display 140 by the display controller 184 to display the display mesh information VMx for the corresponding area. After the desired map information is displayed on the terminal display 140 in this way, the user identifies the point information of the destination by appropriately specifying the point of the destination with the input operation at the terminal input section 130, for example, by moving the cursor displayed on the map on the screen. When the point information is specified in this way, the destination recognizer 182 of the processor 180 recognizes the point information of the destination as the destination information and stores it in the memory 170.

The processor 180 controls the terminal display 140 by the display controller 184 to display an indication for prompting the user to input the settings, i.e., a condition for the travel route search. When the user inputs the settings by operating the terminal input section 130 following the instruction on the displayed screen, the processor 180 acquires the setting information about the settings that have been input (step S204). The acquired setting information is appropriately stored in the memory 170.

Thereafter, the route processor 188 of the processor 180 acquires the setting information stored in the memory 170 and determines if the acquired setting information contains the traffic-congestion prediction request information or not (step S205).

If the route processor 188 of the processor 180 determines in step S205 that the traffic-congestion prediction request information is not contained, the traffic-congestion recognizer 187 acquires the VICS data output from the VICS receiver 120. Then, the processor 180 generates current traffic-congestion information of an area containing the current-position and the destination based on the acquired VICS data. The generated current traffic-congestion information is appropriately stored in the memory 170.

Then, the route processor 188 of the processor 180 acquires the current-position information, the destination information, the setting information and the current traffic-congestion information from the memory 170. Based on the acquired various information, it performs a route search processing to search for the travel route from the current-position of the vehicle to the destination, using the route search map information and the matching data MM contained in the map information stored in the storage 160 (step S206).

For example, when searching for a major street of which data is stored and managed in the route search map information, the route is searched using the route search map information. On the other hand, when searching for a minor street of which data is not stored in the route search map information, the route from a minor street to a major street is searched using the matching data MM. While the route is searched using the matching data MM, the coordinate matching section 186 determines whether a plurality of nodes N indicate the identical point or not to recognize the road arrangement based on the relations between links L.

The route processor 188 detects a plurality of travel routes and selects some of the travel routes based on the acquired setting information and the current traffic-congestion information to generate the travel route information about, for instance, five candidate travel routes that meet the requirements of the user. Besides, the route processor 188 generates required time information by obtaining a required time to the destination according to the respective travel routes in the travel route information. Then, the calculated travel route information including five candidate travel routes is displayed on the terminal display 140 by the display controller 184, and an indication representing the request that the user selects the travel route. The user selects and inputs the travel route information about any one of the routes, and thus the travel route is set.

If, on the other hand, the route processor 188 determines in step S205 that the traffic-congestion prediction request information is contained, the processor 180 acquires the time information from the timer 191 and recognizes the current date based on the acquired time information. Then, it acquires the calendar template 20 from the memory 170, and then retrieves and recognizes the classification ID number of the recognized date based on the acquired calendar template 20 (step S207). It also acquires the current-position information and the destination information stored in the memory 170 and recognizes the current-position and the destination. Then, the traffic-congestion recognizer 187 retrieves and acquires the time-series data 12i corresponding to the recognized classification ID number and containing the current-position and the destination from the traffic-congestion prediction table 10 stored in the storage 160 (step S208).

Thereafter, the processor 180 performs the processing of the step S206. More specifically, the processor 180 generates current traffic-congestion information at the traffic-congestion recognizer 187 and appropriately stores it in the memory 170. Then, the route processor 188 of the processor 180 acquires the current-position information, the destination information and the setting information from the memory 170. Based on the acquired various information, the route processor 188 detects a plurality of travel routes and selects some of the travel routes on the basis of the acquired setting information to generate candidate travel route information about a plurality of candidate travel routes that meet the requirements of the user.

Thereafter, the traffic-congestion recognizer 187 of the processor 180 acquires the current traffic-congestion information from the memory 170 and the current time and day from the timer 191. Then, based on the acquired current traffic-congestion information and the current time and day, the traffic-congestion recognizer 187 estimates the predicted arrival time to arrive at a desired location on each of the candidate travel routes contained in the candidate travel route information generated by the route processor 188. Then, the traffic-congestion recognizer 187 predicts the condition of the traffic-congestion at the desired location on each of the candidate travel routes at the predicted arrival time on the basis of the time-series data 12i acquired in step S208 and generates traffic-congestion prediction information about the predicted condition of the traffic-congestion.

Based on the current traffic-congestion information and the traffic-congestion prediction information, the route processor 188 of the processor 180 performs the route setting processing of the step S206 for travel route selection so as to select some of the candidate travel routes contained in the candidate travel route information. In the route setting processing, the travel routes may be selected base only on the traffic-congestion prediction information. Then, the route processor 188 estimates the time required to arrive at the destination for each of the selected travel routes to generate required time information, and the display controller 184 makes the terminal display 140 display the calculated candidate travel routes and an indication for prompting the user to select a travel route. The user selects and inputs the travel route information about any one of the routes, and thus the travel route is set. If only one route is set, that route is set as the travel route without displaying the instruction to demand the selection.

The processor 180 then controls the terminal display 140 by the display controller 184 to navigate the vehicle with the acquired map information displayed (step S209). At this navigation process, the processor 180 acquires the matching data MM from the storage 160. Then, the coordinate matching section 186 performs a coordinate matching processing on the acquired matching data MM for recognizing the arrangement of roads, or the connection of roads, and the memory 170 stores it. Further, the processor 180 displays on the map information an icon representing the current-position of the vehicle based on the current-position information as well as a traffic information icon regarding the traffic information such as the travel route information about the travel route selected by the user, the traffic-congestion prediction information, the required time information and the current traffic-congestion information.

Subsequently, the processor 180 recognizes the traveling condition of the vehicle based on the data output from the speed sensor, the azimuth sensor and the acceleration sensor of the sensor 110 and the GPS data output from the GPS receiver. Further, the processor 180 provides the guidance information by the guidance notifying section 183 for navigating the travel of the vehicle with the display on the terminal display 140 or with the sound output by the sound output section 150 on the basis of the recognized traveling condition and the route guidance information contained in the travel route information.

More specifically, the display controller 184 of the processor 180 interconnects the nodes N in the matching mesh information MMx acquired from the storage 160 with a polyline and performs a polyline processing on the basis of the arrangement of roads described in the link string block information of the matching data MM so as to display the roads in the area of the matching mesh information MMx containing the travel route on the terminal display 140. Then, under the control of the display controller 184, the terminal display 140 superimposes the name information VMxA and the background information VMxC that are miscellaneous element data about the elements of the map excluding roads in the area corresponding to the matching mesh information MMx of the display mesh information VMx acquired from the storage 160. Then, the current-position is superimposed on the displayed map.

In the step of superimposing the current-position, the map matching processing is performed on the basis of the matching data MM to prevent an indication representing the current-position information of the vehicle from being located off the displayed road. Namely, the processor 180 appropriately corrects the current-position information to locate the displayed current-position on the travel route in the matching data MM. Thus the current-position is displayed on the link string connecting links L. In this way, the current-position is superimposed on the map for providing the navigation. When the current-position reaches the predetermined position, guidance on the traveling direction and the like are provided in visual or audio form. While the coordinate matching processing is performed at the time of acquiring the matching data MM in step S209 in the above description, the coordinate matching processing may alternatively be performed at the time of or before performing the map matching processing.

When the terminal input section 130 is operated to display a map of other areas, the map will be displayed based on the display mesh information VMx acquired from the storage 160 as in the case of the display operation based on the retrieval.

If a new route search is performed again after changing the travel route based on changes in the traffic condition or the setting of side-trip spots, that is, input operations at the terminal input section 130 requesting reroute processing is performed, a travel route is searched again in the same manner as the setting of the travel route described above. More specifically, candidate travel route information is generated to the destination requiring the shortest period of time or the shortest traveling distance by using the current traffic-congestion information and the traffic-congestion prediction information for instance, and the navigation is performed again based on the travel route with the desired setting.

### (Processing for Departure Guidance Notification)

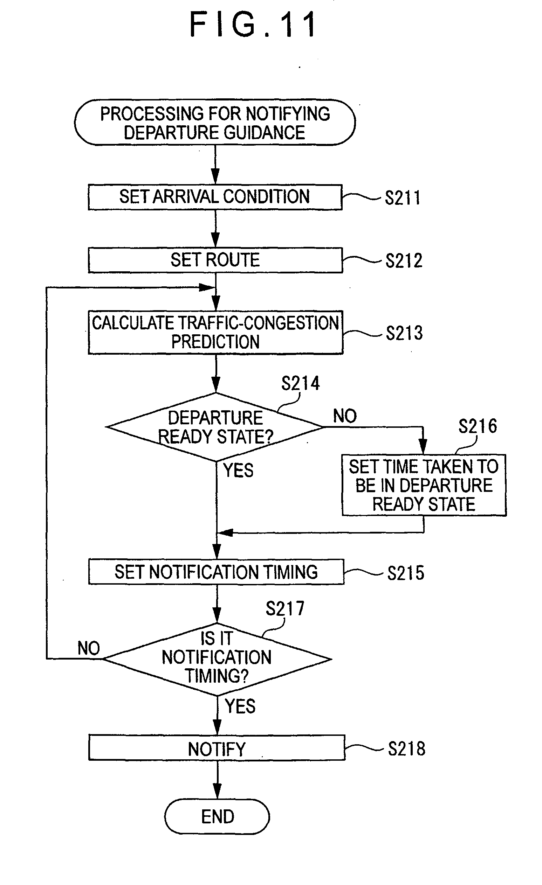

Now, the processing for departure guidance notification for notifying departure guidance to leave a departure point for arriving at the destination at a predetermined time as one of operations of the navigation device 100 will be described with reference to the drawings. Fig. 11 is a flowchart showing the processing for notifying departure guidance in the navigation device.

Firstly, as shown in Fig. 11, the user sets a request for notification of the departure guidance on a menu screen displayed on the terminal display 140 by operating the terminal input section 130 (step S211). According to this setting, a request signal requesting the notification of the departure guidance is generated. When the guidance notifying section 183 of the processor 180 recognizes the signal, the processor 180 makes the display controller 184 display a screen for prompting the user to input the destination information about the destination and the setting information as conditions for notifying the departure guidance such as the scheduled time to arrive at the destination on the terminal display 140. The setting information for prompting the input may be, for example, elapsed time such as XX time later from the current time, other than the scheduled time. The screen displayed may also prompt the input of various conditions of the travel route, such as setting of use of facilities, e.g., a highway and side-trip spots on the route to arrive at the destination. As the method for prompting the input, voice guidance from the sound output section 150 may be applicable.

When the route processor 188 of the processor 180 recognizes the setting information about the conditions for notifying the departure guidance, the search processing of the travel route from the step S202 to the step S208 is performed in the same manner as in the processing for travel route search described above. In other words, the current-position is recognized by the current-position recognizer 181, and the destination of the setting information is recognized by the destination recognizer 182. According to various conditions of the various travel route of the setting information, the route processor 188 searches for a travel route based on the current-position information, the destination information, the setting information, the current traffic-congestion information, and the predicted traffic-congestion information with the use of the map information (step S212). As the travel route to be searched, one route with the shortest travel time satisfying the travel conditions in the setting information is set. The route processor 188 also calculates the predicted required time of the searched route to the destination, and calculates, or, calculates back the departure time based on the predicted required time and the scheduled time of the setting information to arrive at the destination.

The processor 180 then performs traffic-congestion prediction calculation processing based on the current traffic-congestion information and the predicted traffic-congestion information on the travel route searched by the traffic-congestion recognizer 187 (step S213). That is, when the traffic-congestion recognizer 187 detects a change in the traffic-congestion condition and determines that there is a change, the route processor 188 performs travel route search again to search for the travel route to arrive at the destination with the shortest time satisfying the travel conditions in the setting information again, and calculates the predicted required time and departure time thereof. If a change in the traffic-congestion condition is not detected, operation proceeds to the next processing step.

After the step S213, the departure waiting state detector of the sensor 110 determines whether or not it is the departure ready state, that is, whether or not it is a state that the vehicle can depart immediately (step S214). To be more specific, as mentioned above, the sensor 110 determines whether the engine of the vehicle is driven, whether the accessory battery power is supplied, whether the driver is on board and the like. If the departure waiting state detector determines that it is the departure ready state in the step S304, the time when the guidance notifying section 183 notifies the departure guidance for encouraging the departure in visual form by using the terminal display 140 or in audio form by using the sound output section 150 is set (step S215). For example, 10 minutes before the departure time or the like is set.

If, on the other hand, the departure waiting state detector determines that it is not the departure ready state, that is, it is the state that the vehicle can not depart immediately such as the state that the engine is stopped, the accessory power is not supplied, the main body 102 is not connected to the base 101 in the step S214, the time taken to be in the departure ready state is set (step S216). More specifically, if the main body 102 is not connected to the base 101, a terminal current-position as the current-position of the main body 102 is detected based on the signal from the sensor 110 in the same manner as the detection of the current-position described above to generate the terminal current-position information. Then, based on the current-position immediately before removing the main body 102 from the base 101 already stored in the memory 170 or the like and the detected terminal current-position, a travel route to move on foot from the terminal current-position to the current-position is searched with the use of the map information, and a travel route with the shortest travel time or the shortest travel distance is searched. Terminal predicted required time to arrive at the vehicle that is required to travel on the travel route is then calculated, and this terminal predicted required time is set as the time taken to be in the departure ready state. Alternatively, for example, the user may set the time by operating the terminal input section 130. Other than the calculation of the time to move to the vehicle on foot, the calculation may be based on transportation means set by the user's operation at the terminal input section 130 such as a bicycle, taxi, and a public transportation means such as a bus and a train for transportation. Alternatively, the travel route to the vehicle is searched using the map information, and the calculation may be then performed based on every transportation means on the travel route that is detected in the travel route search.

After the step S216, operation proceeds to the step S215 to set the time to notify the departure guidance. Specifically, based on the departure time calculated in the step S213 and the time taken to be in the departure ready state, the time to notify the departure guidance earlier comparing with the time to notify the departure guidance in the departure ready state is calculated in consideration of the time taken to be in the departure ready state. For example, the sum of the departure time and the time taken to be in the departure ready state is set as the time to notify the departure guidance. Alternatively, extra time (e.g. 10 minutes) may be further added to the sum of the departure time and the time taken to be in the departure ready state and set as the time to notify the departure guidance.

After the step S215 of the setting of the notification time, the processor 180 makes the guidance notifying section 183 detect the notification timing to notify the departure guidance based on the time clocked by the timer 191, that is, determines whether or not the time to notify has come (step S217). If it is determined that the time to notify has not come yet in the step S217, operation returns to step S213 in consideration of the possibility that the travel route might be changed due to a change in the traffic conditions. If, in contrast, it determines that the current time clocked by the timer 191 is the time to notify the departure guidance in the step S217, the guidance notifying section 183 notifies the departure guidance (step S218). More specifically, the terminal display 140 and the sound output section 150 are controlled, so that the departure time and/or a content for encouraging the departure is displayed on the screen or provided as voice guidance as previously mentioned.

When the user recognizes the departure guidance, the user leaves according to the departure guidance if ready to leave immediately. If not in the departure ready state, the user is made to be in the departure ready state, that is, made to return to the vehicle according to the departure guidance to leave by the departure time. Based on the departure, it is determined that the current-position recognized by the current-position recognizer 181 is different from the departure point, and the departure is thus recognized. In response, the travel of the vehicle is navigated based on the travel route searched in the step S212 or re-searched in the step S213 in the same manner as the step S209 in the processing for travel route search described above.

### [Advantages of First Embodiment]

As previously described, in the first embodiment, the predicted required time that the vehicle arrives at the destination from the current-position is calculated based on the current-position information, the destination information and the map information, and the predicted departure time that the vehicle leaves is then calculated based on the predicted required time and the preset scheduled time to arrive at the destination. The departure waiting state of the vehicle at the departure point is then recognized, and the time to notify the departure notification information about the departure guidance encouraging the departure of the vehicle is changed depending on the departure waiting state. For example, the departure ready state is detected, and the departure notification information is notified at the timing that varies depending whether or not it is the departure ready state. With this configuration, the departure guidance regarding the travel to arrive at the destination at the scheduled time can be appropriately notified based on the departure state of the user, thereby avoiding arriving at the destination too early or late.

Also, the navigation device 100 is so configured to be removably attached to the vehicle, so that the departure waiting state is recognized based on the attachment state. Accordingly, in the case the navigation device 100 is not attached to the vehicle, the departure guidance is notified at the time earlier than the time to notify in the case of the departure ready state with the navigation device 100 being attached in consideration of the time taken to be in the departure ready state. Therefore, the detection of the departure waiting state can be recognized with simple configuration, and appropriate departure guidance corresponding to the departure state of the user can be notified.

The base 101 arranged on the vehicle and the main body 102 removably attached to the base 101 are provided, so that the navigation device 100 can be removably attached to the vehicle. Accordingly, the attachment state to the vehicle can be easily recognized with the simple configuration.

The terminal current-position of the main body 102 not attached to the vehicle is recognized, and the travel time from the main body 102 to the vehicle is calculated for the calculation of the terminal predicted required time taken to be in the departure ready state. Considering the terminal predicted required time as the time taken to be in the departure ready state, the departure guidance is notified early. With this configuration, the proper time taken to be in the departure ready state can be easily found, and appropriate departure guidance notification can be easily provided.

The current-position recognizer 181 is provided in the main body 102 to be attached to and detached from the vehicle, so that the current-position recognizer 181 can detect the current-position attached on the vehicle and the terminal current-position detached therefrom. Accordingly, the configuration is shared and thus simplified, thereby easily reducing the size, facilitating the production, and lowering the device cost.

The time taken to be in the departure ready state can be input by operating the terminal input section 130. Therefore, the departure guidance suitable for the departure state of the user can be notified.

The departure waiting state is recognized based on whether the engine of the vehicle is started, whether the power is supplied to the main body 102 and so on. The time to notify the departure guidance in the case it is not the departure ready state in which: the engine is stopped; the power is not supplied; the driver is not on board etc. is earlier than the time to notify the departure guidance in the case of the departure ready state in which: the engine is started; the power is supplied; the driver is on board etc. Accordingly, the departure waiting sate can be easily recognized and the departure guidance can be appropriately notified with ease.

The main body 102 has the terminal display 140 and the sound output section 150 for notifying the departure guidance. With this configuration, even when the user detaches the main body 102 from the vehicle and moves away from the vehicle, the departure guidance can be appropriately notified. Also, the notification using both of the screen display and the sound output ensures the notification of the departure guidance.

The main body 102 further has the route processor 188 for searching for the travel route. Accordingly, even when the user moves away from the vehicle, the travel route to return to the vehicle can be acquired, and smooth navigation for moving to the vehicle can be provided. Also, the time taken to be in the departure ready state can be easily calculated, and thus the departure guidance can be notified appropriately.

On the travel route search, the travel route is searched with reference to the traffic information. Therefore, appropriate travel route can be easily searched, and appropriate predicted required time can be obtained. Accordingly, the departure guidance can be appropriately notified. The predicted required time is calculated based on the travel route. This makes the calculation of the predicted required time easy.

Each time the traffic information changes, the travel route is re-searched, and the predicted required time is calculated again. Accordingly, appropriate departure guidance corresponding to the traffic information changing time to time can be notified.

As the traffic information, the traffic prediction information regarding the change of the traffic condition over time based on the statistical traffic condition obtained by statistically processing the past traffic conditions based on the time factors such as traffic-congestion prediction is considered as well as the current traffic condition. Accordingly, appropriate departure guidance reflecting the traffic condition can be notified.

The departure time as the departure guidance is notified in advance, so that the user can respond with more ease compared to the configuration where the departure is notified only when the departure time has come, thereby facilitating the travel to arrive at the destination at the scheduled time.

The traffic-congestion prediction information is generated using the traffic-congestion prediction table 10 containing the statistical traffic information obtained by statistically processing traffic conditions in the past. Therefore, the processing load is lower than that for predicting the traffic-congestion using a special simulation program, and hence the traffic-congestion prediction for every predetermined time can quickly be calculated. In other words, the transition of the traffic-congestion can quickly be notified based on the traffic-congestion prediction, thereby easily providing the effective navigation.

The calendar template 20 is provided so that the traffic-congestion prediction table 10 is associated with the dates in the calendar template 20. In other words, the changeable classification ID number corresponding to the date classification ID 11 contained in the traffic-congestion prediction table 10 is associated with the date information about the date of the calendar. Accordingly, the traffic-congestion can be properly predicted using the traffic-congestion prediction table 10 containing the past data, thereby providing effective navigation. The date of the calendar template 20 is associated with the changeable classification ID number related to the traffic-congestion prediction table. Therefore, if the predicted traffic condition and the actual traffic condition have discrepancies, it is only necessary to change the classification ID number corresponding to the time-series data contained in the traffic-congestion prediction table corresponding to the current status, thereby properly predicting the traffic-congestion.

### [Second Embodiment]

Now, a second embodiment of the present invention will be described with reference to the attached drawings. A communication navigation system of this embodiment is an example of a guiding system as the guiding device of the present invention, and so designed to navigate drive of a mobile body (e.g. a vehicle) as a traveling condition. As in the case of the first embodiment, the guiding system of the present invention is not necessarily designed to navigate drive of a vehicle, but may be so designed to notify traffic information regarding any types of mobile body.

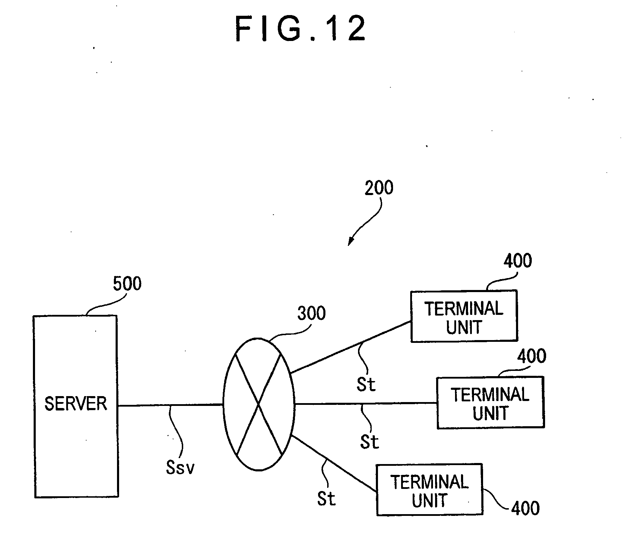

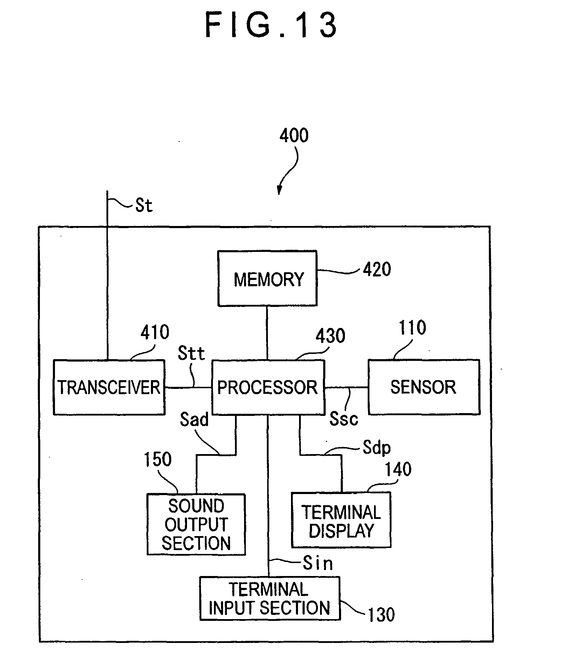

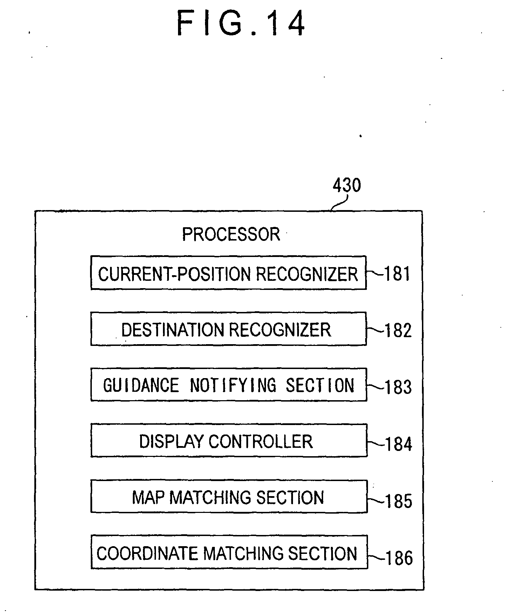

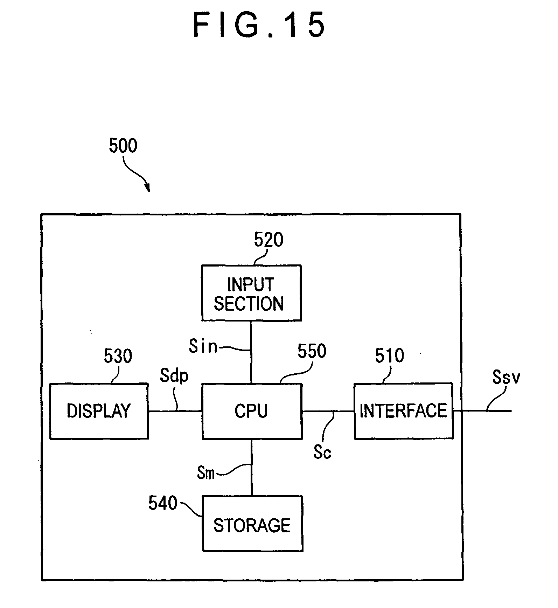

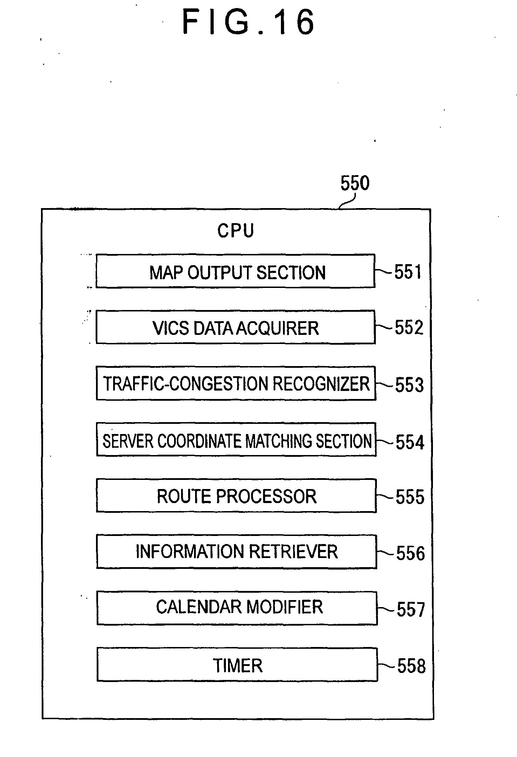

Fig. 12 is a block diagram showing the brief configuration of the navigation system according to the present embodiment. Fig. 13 is a block diagram showing the brief configuration of a terminal unit. Fig. 14 is a block diagram showing the brief configuration of a processor of the terminal unit. Fig. 15 is a block diagram showing the brief configuration of a server. Fig. 16 is a block diagram showing the brief configuration of a CPU of the server. The components same as those in the first embodiment are denoted respectively by the same reference symbols and will not be described any further.

### [Configuration of Navigation System]

Referring to Fig. 12, the reference numeral 200 denotes the communication navigation system (guiding system). The navigation system 200 notifies guidance on a travel along with a traveling condition of a mobile body (e.g. a vehicle). The mobile body is not limited to a vehicle, but includes any types of mobile body such as an aircraft and a ship. The navigation system 200 has a network 300, a terminal unit 400 functioning as a traffic condition notifying device, i.e., the guiding device, and a server 500.

The network 300 is connected to the terminal unit 400 and the server 500. The network 300 interconnects the terminal unit 400 and the server 500 to enable the communication therebetween. The network 300 may be Internet based on a general-purpose protocol such as TCP/IP protocol, an intranet, a LAN (Local Area Network), a communication network and a broadcasting network that have a plurality of base stations capable of communicating by way of a radio medium, or the radio medium itself that enables direct communication between the terminal unit 400 and the server 500. The radio medium may be any one of electric waves, light beams, acoustic waves and electromagnetic waves.

Like the navigation device 100 of the first embodiment, the terminal unit 400 has a base 101 and a main body 102 and may be, for example, an in-vehicle unit installed in a vehicle as a mobile body, a portable unit, a PDA (Personal Digital Assistant), a mobile phone, a PHS (Personal Handyphone System) or a portable personal computer. The terminal unit 400 acquires map information delivered by the server 500 over the network 300. On the basis of the map information, the terminal unit 400 searches for and displays information about a current-position and a destination, a route to the destination, predetermined shops nearby, and information about services offered by the shops. As shown in Fig. 13, the terminal unit 400 includes a transceiver 410 that operates as a terminal communication section, a sensor 110, a terminal input section 130, a terminal display 140, a sound output section 150, a memory 420, a processor 430 and so on.

The transceiver 410 is connected to the server 500 over the network 300, and also connected to the processor 430. The transceiver 410 can receive a terminal signal St from the server 500 over the network 300. When acquiring the terminal signal St, the transceiver 410 performs a preset input interface processing so as to output the terminal signal St as a processing terminal signal Stt to the processor 430. The transceiver 410 can also input the processing terminal signal Stt from the processor 430. When acquiring the processing terminal signal Stt to be input, the transceiver 410 performs a preset output interface processing so as to send the processing terminal signal Stt as the terminal signal St to the server 500 over the network 300.

The sensor 110 detects the departure waiting state by detecting the base 101 of the main body 102, in addition to the traveling condition of the vehicle, that is, the current-position and the driving status, and outputs them as a predetermined signal Ssc to the processor 430.

The terminal input section 130 has various operation buttons 131 and operation knobs to be used for input operations. The operation buttons 131 and the operation knobs are used to input, for example, the settings for the operations of the terminal unit 400. More specifically, they may be used: to issue an instruction for executing a communication operation as an communication request information for acquiring information over the network 300; to set the type of information to be acquired and acquiring condition; to set a destination; to retrieve information; to display the driving status (traveling condition) of the vehicle; to modify the expressions; and to set the scheduled time to arrive at the destination and the time to notify the departure guidance. When the settings are input, the terminal input section 130 outputs a predetermined signal Sin to the processor 430 so as to apply the settings.

The terminal display 140, under the control of the processor 430, displays a signal Sdp representing image data sent from the processor 430. The image data may be image data of the map information and the retrieval information sent from the server 500.

The sound output section 150, under the control of the processor 430, outputs and notifies various signals Sad as sounds from a sound generator. The various signals Sad represent the sound data etc. from the processor 430.

The memory 420 appropriately stores various information acquired over the network 300, the settings that are input by the terminal input section 130, music data, image data and the like. The memory 420 also stores various programs that run on the OS (Operating System) controlling the whole operation of the terminal unit 400. The memory 420 may include drives or drivers for readably storing data on a recording medium such as a HD (Hard Disk) or an optical disc.

The processor 430 has various input/output ports (not shown) including a communication port connected to the transceiver 410, a GPS receiving port connected to a GPS receiver of the sensor 110, sensor ports respectively connected to various sensors of the sensor 110, a key input port connected to the terminal input section 130, a display control port connected to the terminal display 140, a sound control port connected to the sound output section 150 and a storage port connected to the memory 420. As shown in Fig. 14, the processor 430 has various programs such as a current-position recognizer 181, a destination recognizer 182, a guidance notifying section 183, a display controller 184, a map matching section 185, a coordinate matching section 186 and so on.

The current-position recognizer 181 recognizes the current-position of the vehicle and the terminal current-position of the main body 102 when removed from the base 101. Various information acquired by the current-position recognizer 181 are appropriately stored in the memory 420.

The destination recognizer 182, for instance, acquires the destination information about the destination set by the input operation at the terminal input section 130 and recognizes the position of the destination. Such destination information recognized by the destination recognizer 182 is appropriately stored in the memory 420.

The guidance notifying section 183 provides guidance stored in the memory 420 on the basis of travel route information and feature guidance information acquired in advance according to the driving status of the vehicle. The guidance is related to the travel of the vehicle, for instance, the contents for assisting the drive of the vehicle. The guidance notifying section 183 generates departure notification information for encouraging the departure of the vehicle, and notifies the information by displaying on the terminal display 140 or by voice with the use of the sound output section 150.

The display controller 184 controls the terminal display 140 to notify users various information by using the screen display, and to change the display area of the map information to be displayed.

The map matching section 185 performs the map matching processing for displaying the current-position recognized by the current-position recognizer 181 based on the map information obtained from the server 500.

The coordinate matching section 186 performs the coordinate matching processing for determining if point information about nodes N contained in the matching data MM of the map information acquired from the server 500 indicate an identical point or not.

The server 500 can communicate with the terminal unit 400 over the network 300. The server 500 is capable of acquiring various information from other servers (not shown) of various government offices such as Meteorological Agency and National Police Agency, private organizations, VICS and business enterprises over the network 300. The information to be acquired may be travel information for the vehicle, i.e., various travel related information used during the travel of the vehicle such as weather information, VICS data including traffic-congestion, traffic accidents, constructions, traffic controls, and shop information about various shops including gasoline stations and restaurants etc. As shown in Fig. 15, the server 500 includes an interface 510 functioning as a current-position information acquirer, a destination information acquirer and a terminal position recognizer, an input section 520, a display 530, a storage 540, a CPU (Central Processing Unit) 550 and so on.

The interface 510 performs a preset input interface processing over a server signal Ssv input over the network 300 so as to output the server signal Ssv as a processing server signal Sc to the CPU 550. When the processing server signal Sc to be transmitted from the CPU 550 to the terminal unit 400 is input in the interface 510, the interface 510 performs preset output interface processing over the input processing server signal Sc so as to output the processing server signal Sc as a server signal Ssv to the terminal unit 400 over the network 300. Note that the server signal Ssv can be appropriately output only to a predetermined terminal unit 400 on the basis of the information described in the processing server signal Sc.

Like the terminal input section 130, the input section 520, which may be a keyboard, a mouse or the like, has various operation buttons and operation knobs (not shown) to be used for input operations. The operation buttons and the operation knobs are used: to input the settings for operations of the server 500; to set information to be stored in the storage 540; and to update the information stored in the storage 540. When the settings are input, the input section 520 outputs a signal Sin corresponding to the setting to the CPU 550 so as to apply the settings. In place of the operation buttons and the operation knobs, the input section 520 may include a touch panel that may be arranged at the display 530 for input operations and a sound input section for the input operations thereof as long as various settings can be input.

The display 530, just like the terminal display 140, displays a signal Sdp representing image data sent from the CPU 550 under the control of the CPU 550. The image data may be those acquired from the storage 540 and those acquired from external servers over the network 300.

The storage 540 readably stores various information received from the terminal unit 400 and external servers such as map information shown in Figs. 3 and 4 and a traffic-congestion prediction table 10 as shown in Fig. 5. The storage 540 also readably stores the calendar template 20 associated with the terminal units 400 connected to the server 500 over the network 300 as shown in Fig. 6. More specifically, although not shown, the storage 540 has a various information storage area for storing various information, a map information storage area that operates as a map information storage for storing map information, a traffic-congestion prediction table storage area that operates as a statistical traffic information storage for storing the traffic-congestion prediction table 10 and a calendar storage area for storing the calendar template 20.

While the storage 540 has the above-mentioned four storage areas in this embodiment, the storage 540 may not have any of the above-mentioned storage areas, or may have additional storage areas. The storage 540 may include drives or drivers for readably storing data on a recording medium such as a HD (Hard Disk), a DVD (Digital Versatile Disc), an optical disc and a memory card. Information to be stored may include, for example, information input by the input operation at the input section 520, and the contents of the information stored with the input operation can be appropriately updated. The storage 540 also stores information such as various programs that run on an OS (Operating System) controlling the whole operation of the server 500 and the navigation system 200.

The storage 540, for instance, stores the retrieval information for acquiring information of a predetermined point in the map information. More specifically, the retrieval information provided upon the retrieval request from the terminal unit 400 includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The storage 540 stores personal information about users who use the navigation system 200 with the terminal unit 400. The personal information may include a name and an address, a user ID number and a password assigned to each user, a type of the terminal unit 400 for the use of the navigation system 200, and an address number of the terminal unit 400 used for communicating with the terminal unit 400. Furthermore, the storage 540 stores various information used for performing the navigation processing in a manner readable by the CPU 550.

As shown in Fig. 16, the CPU 550 has various programs stored in the storage 540 such as a map output section 551, a VICS data acquirer 552, a traffic-congestion recognizer 553, a server coordinate matching section 554, a route processor 555 (a travel route setting section) functioning as a map information acquirer, a scheduled time information acquirer, a predicted required time calculator and a terminal arrival time calculator, an information retriever 556, a calendar modifier 557, a timer 558 and so on.

The map output section 551 responds to the input of the processing server signal Sc to refer to the information requesting a distribution of the information about the map information contained in the processing server signal Sc, and retrieves the requested information from the map information stored in the storage 540, e.g., the display data VM and matching data MM corresponding to a predetermined area to read it out as the memory signal Sm. The map output section 551 appropriately converts the read memory signal Sm into a processing server signal Sc, outputs the processing server signal Sc to a predetermined or all terminal units 400 via the interface 510 and the network 300 on the basis of the processing server signal Sc, and distributes the requested information contained in the map information.

The VICS data acquirer 552, just like the VICS receiver 120 of the first embodiment, responds to the input of the processing server signal Sc and refers to the information about the request for the travel route search contained in the processing server signal Sc so as to acquire the VICS data from the VICS (not shown).

The traffic-congestion recognizer 553 responds to the input of the processing server signal Sc and refers to the information about the request for the travel route search contained in the processing server signal Sc so as to generate current traffic-congestion information as the memory signal Sm based on the VICS data acquired by the VICS data acquirer 552. Also, the traffic-congestion recognizer 553, just like the traffic-congestion recognizer 187, responds to the input of the processing server signal Sc and refers to and the information about the request for the travel route search concerning with the traffic-congestion information and the traffic-congestion prediction contained in the processing server signal Sc so as to generate traffic-congestion prediction information as the memory signal Sm. Then, the traffic-congestion recognizer 553 appropriately converts the generated memory signal Sm into a processing server signal Sc, outputs the processing server signal Sc to a predetermined or all terminal units 400 via the interface 510 and the network 300 on the basis of the processing server signal Sc, and notifies the current traffic-congestion condition and the predicted traffic-congestion that might occur before the arrival to the destination.

The server coordinate matching section 554, just like the above-described coordinate matching section 186 of terminal unit 400, performs the coordinate matching processing for determining if point information about nodes N contained in the matching data MM of the map information indicate an identical point or not.

The route processor 555, just like the route processor 188 of the first embodiment, responds to the input of the processing server signal Sc and refers to the information about the request for the travel route search contained in the processing server signal Sc so as to generate travel route information, predicted required time information and departure time information as the memory signal Sm. Then, the route processor 555 appropriately converts the generated memory signal Sm into a processing server signal Sc, outputs the processing server signal Sc to a predetermined or all terminal units 400 via the interface 510 and the network 300 on the basis of the processing server signal Sc, and notifies the travel route, the predicted required time and the departure time information.

The information retriever 556, just like the information retriever 189 of the first embodiment, responds to the input of the processing server signal Sc and refers to the information about the retrieval request for the retrieval information contained in the processing server signal Sc so as to hierarchically retrieve the retrieval information stored in the storage 540 typically on the basis of item information and read it as the memory signal Sm. Then, the information retriever 556 appropriately converts the generated memory signal Sm into a processing server signal Sc, outputs the processing server signal Sc to a predetermined or all terminal units 400 via the interface 510 and the network 300 on the basis of the processing server signal Sc, and delivers the retrieval information.

The calendar modifier 557 responds to the input of the processing server signal Sc and recognizes information contained in the processing server signal Sc, which may be calendar-modification request information requesting the modification of the calendar template 20 and terminal-specific information such as ID numbers for identifying a terminal unit 400 that has generated the calendar-modification request information. Then, the calendar modifier 557, just like the calendar modifier 190 of the first embodiment, appropriately updates the calendar template 20 stored in the storage 540 and associated with the terminal unit 400 identified by the terminal-specific information stored in the storage 540.

The timer 558 recognizes the current time typically based on the reference pulse of an internal clock. Then, the timer 558 appropriately outputs time information about the recognized current time.

The CPU 550 responds to the signal Sin input from the input section 520 by the input operation at the input section 520, and appropriately performs calculation based on the contents corresponding to the input operation to appropriately generate a signal Sdp and the like. Then the CPU 550 appropriately outputs the generated various signals to the display 530, the interface 510 and the storage 540 and operates them so as to execute the input contents.

### [Operation of Navigation System]

Now, the operation of the navigation system 200 will be described with reference to the attached drawings. The processing that is substantially the same as those of the first embodiment will be described only briefly.

### (Calendar Template Modifying Process)

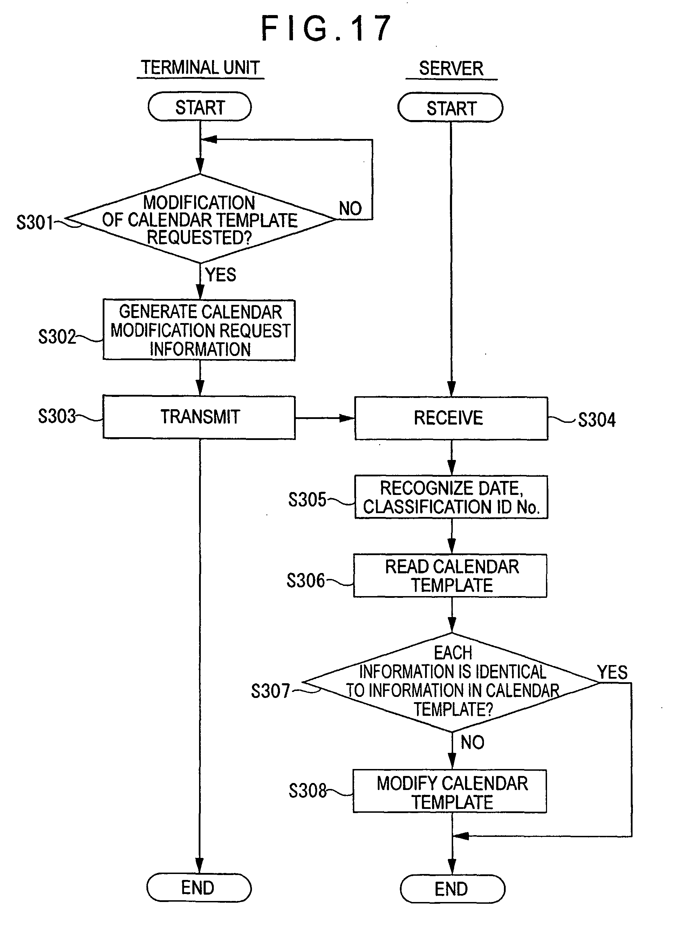

Firstly, the processing for modifying the calendar template 20 as one of the operations of the navigation system 200 will be described with reference to Fig. 17. Described herein is the processing for modifying the calendar template 20 as shown in Fig. 6 stored in the storage 540 of the server 500 based on the information about, for example, a festival scheduled on 5th in City A, that a user have acquired via the radio or TV broadcastings. Fig. 17 is a flowchart showing the processing for modifying a calendar template.

Firstly, the user in the vehicle switches on the terminal unit 400 to supply the power thereto. When the power is supplied, the processor 430 controls the terminal display 140 to display a main menu and a screen for prompting the user to set a specific operation to be executed by the terminal unit 400.

Then, as shown in Fig. 17, the user operates the terminal input section 130 to set a command for modifying the calendar template 20. When the processor 430 recognizes the set command for modifying the calendar template 20 at the calendar modifier 557 (step S301), it makes the terminal display 140 display a screen for prompting the user to set the date information and event information necessary for modifying the calendar template 20.

When the user sets the date information and the event information by operating the terminal input section 130 following the instructions on the displayed screen, the processor 430 recognizes the set date information and the event information. Then, the processor 430 generates calendar-modification request information containing the recognized date information and event information (step S302), and the transceiver 410 transmits the generated calendar-modification request information to the server 500 over the network 300. When transmitting the calendar-modification request information, the transceiver 410 also transmits the terminal-specific information for identifying the terminal unit 400 (step S303).

When the server 500 receives the calendar-modification request information and the terminal-specific information transmitted from the terminal unit 400 (step S304), the calendar modifier 557 recognizes the date information and the event information contained in the received calendar-modification request information (step S305). More specifically, the calendar modifier 557 recognizes the date specified according to the date information as 5th, and the classification ID number associated with the event information as "ID4".

Thereafter, the calendar modifier 557 reads out the calendar template 20 associated with the terminal unit 400 that has transmitted the calendar-modification request information on the basis of the terminal-specific information received in step S304 (step S306). Then, the calendar modifier 557 determines if the various information recognized in step S305 are identical to the information contained in the calendar template 20 read in step S306 or not (step S307).

If the calendar modifier 557 determines in step S307 that the information are identical, it ends the processing without modifying the calendar template 20. If, on the other hand, the calendar modifier 557 determines that the information are not identical, it modifies the calendar template 20 on the basis of the various information recognized in step S305 (step S308). More specifically, since the classification ID number of the 5th recognized in step S305 is "ID4" and the classification ID number of the 5th recognized based on the calendar template 20 is "ID1", the calendar modifier 557 modifies the classification ID number of the 5th from "ID1" to "ID4" as shown in Fig. 9. Then, the calendar modifier 557 associates the calendar template 20 containing the modified classification ID number with the terminal unit 400 that has transmitted the calendar-modification request information, stores it in the storage 540, and ends the processing.

### (Processing for Travel Route Search)

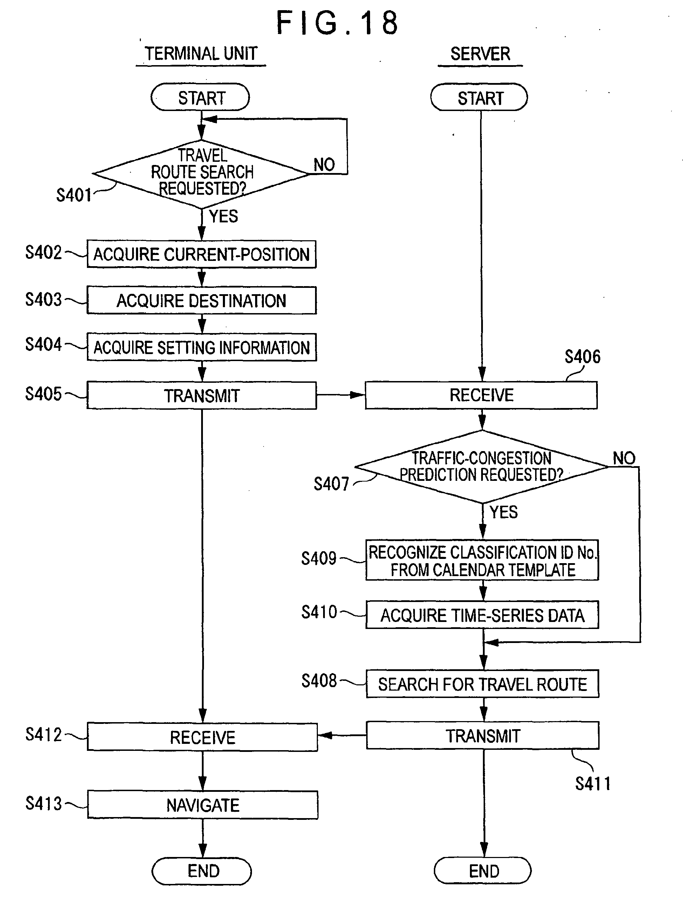

Now, the processing for travel route search as one of operations of the navigation system 200 will be described with reference to Fig. 18. Fig 18 is a flowchart showing the processing for travel route search in the navigation system.

Firstly as shown in Fig. 18, the user operates the terminal input section 130 to set a command for searching for a travel route. When the processor 430 recognizes the set command for searching for a travel route (step S401), the processor 430 makes the terminal display 140 display a screen for prompting the user to set various information necessary for travel route search such as the destination, the setting information about the preference for shortest travel distance or shortest travel time and the necessity of traffic-congestion prediction.

When the processor 430 recognizes the various information necessary for the travel route search by the route processor 555, the current-position recognizer 181 acquires the current-position information about the current-position (step S402) and the destination recognizer 182 recognizes the destination information about the set destination (step S403). The processor 430 also acquires the setting information about the settings that have been input (step S404). The acquired current-position information, the destination information and the setting information are appropriately stored in the memory 420.

Thereafter, the processor 430 controls the transceiver 410 to transmit the current-position information, the destination information and the setting information stored in the memory 420 as well as a signal requesting the travel route search to the server 500. When transmitting the various information, the transceiver 410 also transmits the terminal-specific information for identifying the terminal unit 400 (step S405). As the terminal-specific information, data configuration having information for specifying an attention to which the departure notification information regarding the departure guidance to be notified is sent (e.g. telephone number and mail address of a mobile communication device like a mobile phone owned by the user to which the departure guidance can be notified) may be applicable other than the personal information.

When the server 500 receives the various information transmitted from the terminal unit 400 by the interface 510 through the network 300 (step S406), the route processor 555 of the CPU 550 determines if the received setting information contains a traffic-congestion prediction request information or not (step S407).

If the route processor 555 of the CPU 550 determines in step S407 that the traffic-congestion request information is not contained, the VICS data acquirer 552 acquires the VICS data. Then, the traffic-congestion recognizer 553 of the CPU 550 generates current traffic-congestion information of an area containing the current-position and the destination based on the acquired VICS data. Thereafter, based on the current-position information, destination information, the setting information and the current traffic-congestion information, the route processor 555 of the CPU 550 executes a route search processing to search for the travel route from the current-position of the vehicle to the destination (step S408).

More specifically, the route processor 555 generates some pieces of the travel route information that meet the requirements of the user, using the map information stored in the storage 540. Then, the route processor 555 estimates the predicted required time to arrive at the destination and the departure time for each of the selected travel routes of the travel route information to generate required time information as in the case of the first embodiment.

If, on the other hand, the route processor 555 determines in step S407 that the traffic-congestion prediction request information is contained, the route processor 555 acquires the time information from the timer 558 and recognizes the current date based on the acquired time information. Then, the traffic-congestion recognizer 553 of the CPU 550 reads out the calendar template 20 associated with the terminal unit 400 that has requested the travel route search from the storage 540 on the basis of the terminal-specific information received in step S406. Thereafter, the traffic-congestion recognizer 553 retrieves and recognizes the classification ID number of the recognized date based on the read calendar template 20 (step S409). Then, it recognizes the current-position and the destination based on the current-position information and the destination information received in step S406. Additionally, the traffic-congestion recognizer 553 retrieves and acquires the time-series data 12i corresponding to the recognized classification ID number and containing the current-position and the destination from the traffic-congestion prediction table 10 stored in the storage 540 (step S410).

Thereafter, the CPU 550 performs the processing of the step S408. More specifically, the traffic-congestion recognizer 553 of the CPU 550 generates current traffic-congestion information. Based on the current-position information, destination information, setting information and current traffic-congestion information, the route processor 555 of the CPU 550 detects a plurality of travel routes and selects some of the travel routes on the basis of the acquired setting information to generate candidate travel route information about a plurality of candidate travel routes that meet the requirements of the user.

Further, the traffic-congestion recognizer 553 of the CPU 550 acquires the current time and day from the timer 558. Then, based on the current traffic-congestion information and the current time and day, the traffic-congestion recognizer 553 estimates the predicted arrival time to arrive at a desired location on each of the candidate travel routes contained in the candidate travel route information generated by the route processor 555. Additionally, the traffic-congestion recognizer 553 predicts the condition of the traffic-congestion at the desired location on each of the candidate travel routes at the predicted arrival time on the basis of the time-series data 12i acquired in step S410 and generates traffic-congestion prediction information about the predicted condition of the traffic-congestion.

Based on the current traffic-congestion information and the traffic-congestion prediction information, the route processor 555 of the CPU 550 selects some of the candidate travel routes contained in the candidate travel route information to generate travel route information about the selected travel routes that meet the requirements of the user, the condition of the current traffic-congestion and that of the predicted traffic-congestion. Then, the route processor 555 generates required time information for each of the travel routes contained in the travel route information.

After the step S408, the server 500 controls the interface 510 on the basis of the terminal-specific information received in step S406 and appropriately transmits the travel route information, the traffic-congestion prediction information, the required time information and the current traffic-congestion information obtained as a result of the travel route search processing to the predetermined terminal unit 400 together with the map information (step S411). It may acquire the matching data MM in advance on the basis of the current-position information on. The map information to be transmitted needs to include only the matching mesh information MMx of the matching data MM that contains the nodes N and the links L for the roads of the travel routes, the display mesh information VMx of the display data VM for other areas, the name information VMxA and the background information VMxC in the area corresponding to the matching mesh information MMx.

The processor 430 of the terminal unit 400 which has received the various information (step S412), in the same manner as the above-described first embodiment, navigates by displaying the acquired map information (step S413). During the navigation, the coordinate matching section 186 performs a coordinate matching processing on the acquired matching data MM for recognizing the arrangement of roads, or the connection of roads, and the memory 420 stores it. Under the control of the processor 430, the display controller 184 makes the terminal display 140 display the travel route information about, e.g., five candidate travel routes calculated by the server 500 and an indication for prompting the user to select a travel route. The user selects and inputs the travel route information about any one of the routes, and thus the travel route is set.

Thereafter, under the control of the display controller 184 of the processor 430, the terminal display 140 superimposes an icon indicating the current-position of the vehicle on the basis of the current-position information as well as the travel route information selected by the user, the traffic-congestion prediction information, the required time information and the current traffic-congestion information on the received map information. Subsequently, the processor 430 recognizes the traveling condition of the vehicle based on the various data output from the sensor 110. Note that, the information on the traveling condition of the vehicle is transmitted to the server 500 if necessary. Then, the guidance notifying section 183 of the processor 430 provides the guidance information for guiding the travel of the vehicle in visual or audio form on the basis of the recognized traveling condition and the route guidance information contained in the travel route information. Additionally, at the time of the navigation, the server 500 performs the reroute processing if necessary, when recognizing the request on the reroute processing from the terminal unit 400, in the same manner as the first embodiment.

### (Processing for Notifying Departure Guidance)

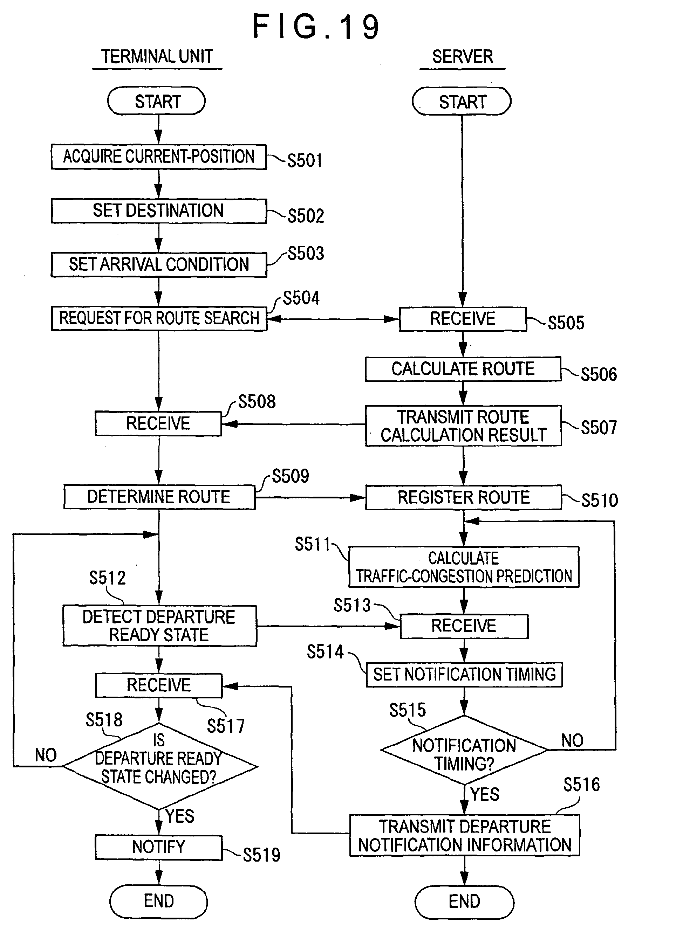

Now, the processing for notifying departure guidance as one of the operations of the navigation system 200 will be described with reference to the attached drawings. Fig 19 is a flowchart showing the processing for notifying departure guidance in the navigation system.

Firstly, as shown in Fig. 19, the user sets a request for notification of the departure guidance by operating the terminal input section 130 in the same manner as the first embodiment. With this setting, the processor 430 makes the current-position recognizer 181 recognize the current-position (step S501), and makes the destination recognizer 182 recognize the destination of the setting information (step S502). The processor 430 acquires setting information as a condition for notifying the departure guidance such as the scheduled time to arrive at the destination (step S503). Thereafter, the processor 430 controls the transceiver 410 to transmit the current-position information, the destination information and the setting information stored in the memory 420 as well as a signal requesting the travel route search to the server 500. When transmitting the various information, the transceiver 410 also transmits the terminal-specific information for identifying the terminal unit 400 (step S504).

When the server 500 receives the various information transmitted from the terminal unit 400 by the interface 510 through the network 300 (step S505), the route processor 555 of the CPU 550 appropriately searches for the travel route based on the content described in the received setting information (step S506) in the same manner as the steps S407 to S410 in the processing for travel route search described above. The CPU 550 of the server 500 then transmits the travel route information, the traffic-congestion prediction information, the required time information and the current traffic-congestion information obtained as a result of the travel route search processing together with the map information by the interface 510 to the predetermined terminal unit 400 through the network 300 (step S507).

When the processor 430 of the terminal unit 400 receives the various information (step S508), in the same manner as the above-described first embodiment, the terminal display 140 displays a plurality of travel routes and a screen for prompting the user to select any one of the travel routes. When the user sets any one of the travel routes by operating the terminal input section 130 according to the displayed screen (step S509), the processor 430 transmits information regarding the selected travel route to the server 500. When the server 500 receives the information regarding the selected travel route from the terminal unit 400 (step S510), in the same manner as the first embodiment, the traffic-congestion prediction calculation processing is performed based on the current traffic-congestion information and the predicted traffic-congestion information on the travel route searched by the traffic-congestion recognizer 553 (step S511).

Meanwhile, the processor 430 of the terminal unit 400 that has transmitted the information regarding the selected travel route to the server 500, in the same manner as the first embodiment, the departure waiting state detector of the sensor 110 determines whether or not it is the departure ready state, that is, whether or not it is a state that the vehicle can depart immediately (step S512). The processor 430 of the terminal unit 400 then transmits the detected information whether or not it is the departure ready state to the server 500. When the server 500 receives the information whether or not it is the departure ready state (step S513), in the same manner as the first embodiment, the time when the guidance notifying section 183 notifies the departure guidance for encouraging the departure in visual form by using the terminal display 140 or in audio form by using the sound output section 150 is set based on the state ready for the departure or the state not ready (step S514). Specifically, the notification time is set to, for example, 10 minutes before the departure time if it is the departure ready state. If, in contrast, it is not the departure ready state, the terminal arrival time is calculated based on the travel route from the terminal current-position of the main body 102 of the terminal unit 400 or a mobile communication device to the vehicle, and the notification time is set considering this terminal arrival time as the time taken to be in the departure ready state.

The CPU 550 of the server 500 detects the notification timing to notify the departure guidance with use of the timer 558, that is, determines whether or not the time to notify has come (step S515). If it is determined that the time to notify has not come yet in the step S515, operation returns to step S511 in consideration of the possibility that the travel route might be changed by a change in the traffic conditions. If, in contrast, it is determined that the current time clocked by the timer 558 is the time to notify the departure guidance in the step S515, a signal indicative thereof is transmitted to the terminal unit 400 and a mobile communication device like a mobile phone owned by the user to which the departure guidance can be notified based on the terminal-specific information (step S516). If the terminal unit 400 having received the signal indicative thereof is in a state in which the departure guidance can be notified, the signal does not have to be transmitted to the mobile communication device.

When the guidance notifying section 183 of the terminal unit 400 recognizes the signal transmitted from the server 500 and indicating that the notification time has come (step S517), the departure waiting state detector of the sensor 110 determines whether or not the departure ready state is changed (step S518). If it is determined that the departure ready sate is changed in the step S518, operation returns to the step S512 and the information regarding the departure waiting state changed therefrom is transmitted again to the server 500. If, in contrast, it is determined that the departure ready state is not changed in the step S518, the guidance notifying section 183 notifies the departure guidance (step S519). If the terminal unit 400 is installed on the vehicle but the driver is not in the vehicle or if the terminal unit 400 cannot be activated with no power being supplied thereto, the departure guidance is notified by the mobile communication device based on the signal transmitted from the server 500 in the step S516. Thus, the user can surely recognize the departure guidance even when the terminal unit 400 cannot notify the departure guidance to the user.

### [Advantages of Second Embodiment]

As previously described, in the second embodiment, the route processor 555 of the server 500 calculates the predicted required time that the vehicle arrives at the destination from the current-position based on the current-position information and the destination information from the terminal unit 400 as in the case of the first embodiment, and then calculates the predicted departure time that the vehicle leaves based on the predicted required time and the preset scheduled time from the terminal unit 400 to arrive at the destination. The server 500 then recognizes the departure waiting state of the vehicle at the departure point detected by the terminal unit 400, and the time to notify the departure notification information about the departure guidance encouraging the departure of the vehicle is changed depending on the departure waiting state. For example, the time to notify the departure guidance is appropriately set, and the departure notification information is notified at the timing that varies depending the departure waiting state. With this configuration, as in the case of the first embodiment, the departure guidance regarding the travel to arrive at the destination at the scheduled time can be appropriately notified based on the departure state of the user, thereby avoiding arriving at the destination too early or late.

Also, the signal instructing to notify the departure guidance to the mobile communication device owned by the user as well is sent for the notification of the departure guidance. With this configuration, the departure guidance can be surely provided to the user.

If the terminal unit 400 can notify the guidance based on the information whether or not it is the departure ready state, the signal instructing to notify the departure guidance to the mobile communication device is not sent. Accordingly, the communication cost can be easily reduced.

The signal instructing the notification of the departure guidance is sent from the server 500, and the guidance notifying section 183 of the terminal unit 400 notifies the departure guidance information regarding the departure guidance. With this configuration, the notification can be quickly performed with reduced communication load while the communication cost can be easily lowered.

The notification time is monitored based on the current time clocked by the timer 558 of the server. Accordingly, overall monitoring of the notification time can be performed, thereby appropriately notifying the departure guidance.

Further, in the second embodiment, the server 500 performs the calculation of the route search, the predicted required time, and the predicted departure time etc. which are relatively high in processing load. Accordingly, the computing load of the terminal unit 400 can be reduced, and the structure thereof can be simplified. This is effective especially for vehicles having limited installation space and strongly requiring the size reduction. Accordingly, mobile phones used widely can be applied as the terminal unit 400 as previously described, and thus the use thereof can be easily spread.

The server 500 stores the map information and the traffic-congestion prediction table 10 used for the traffic-congestion predictions, of which data volume is relatively large. Therefore, the configuration of the terminal unit 400 can be simplified. Also, if the map information and the traffic-congestion prediction table 10 stored in the server 500 are updated, the terminal units 400 can share the updated information. Thus, the navigation system 200 can be improved in terms of the maintenance and management ability and the operation ability. Further, the terminal units 400 can appropriately acquire the most updated information and provide good navigating according to the most updated information, thereby improving the usability.

The server 500 storing the map information and the traffic-congestion prediction table 10 searches for the travel route and delivers the travel route to the terminal unit 400. With this configuration, the processing load of the terminal units 400 can be reduced. In other words, the terminal unit 400 is not required to have a large processing capacity, so that the terminal unit 400 may be simply configured allowing the use in a mobile phone etc. Thus, the size and the cost thereof can be reduced, and thereby easily promoting the wide use thereof.

Since the processor 430 of the terminal unit 400 and the CPU 550 of the server 500 are configured as programs, the use of the map information is facilitated and thereby easily promoting the wider use thereof. The programs may be recorded on recording medium so that a computing section, or a computer, reads them. With this configuration, the use of the map information can be facilitated and the programs can easily be handled, thereby further expanding the use thereof. The computing section may not necessarily be a single computer but may be a plurality of computers connected over a network, elements such as a CPU and a microcomputer, or a circuit board on which a plurality of electronic parts are mounted.

### [Modification of Embodiment]

The present invention is not limited to the above specific embodiments, but includes modifications and improvements as long as the objects of the present invention can be attained.

The mobile body is not limited to a vehicle, but includes any mobile body such as an airplane or a ship. The user oneself may be the mobile body if the current-position of the user carrying the terminal unit 400 is recognized as the current-position of the terminal unit 400. Additionally, as mentioned earlier, a mobile phone or a PHS (Personal Handyphone System) may be used as the terminal unit 400 that can be carried directly by the user, while the base station of the mobile phone or the PHS may be used as the server 500. With this arrangement, the mobile phone or the PHS may acquire information from the base station. This is especially effective if a mobile body such as a vehicle of which predicted required time often varies as previously described in accordance with the traffic condition change.

Although the configuration of the navigation for searching a travel route and guiding is described as the guiding device, it may be a configuration for simply notifying the departure guidance without guiding the travel.

The traffic condition is not limited to the traffic-congestion but includes controls due to road construction etc. relating to a travel state of the mobile body and various conditions affecting the travel state of the mobile body such as driving of vehicle including landslide, weather such as approach of typhoon, rain storm or snow storm.

While some of the travel routes selected based on the destination information and setting information are transmitted in the above described embodiments, the travel route may be selected, or searched, only on the basis of the current-position information and the destination information. While the current-position recognizer recognizes the current-position information based on the data output from the various sensors and the GPS data output from the GPS receiver in the above described embodiments, other arrangement method may alternatively be used to recognize the current-position of the mobile body. As described above, the current-position recognizer may recognize the simulated current-position input at the terminal input section 130 as the current-position. While some travel routes are notified so that the user can select one of them in the embodiment, only the best travel route may be notified.

As for the departure waiting state, for example, it may be configured to be attachable to and detachable from the vehicle so that the departure waiting state, or, the departure ready state is recognized based on the attachment state, and its timing may be simply changed depending on the attachment state so that the departure guidance is notified 10 minutes before the departure time if attached and a preset timing (e.g. 1 hour) before the departure if detached. According to this configuration, since only the switching of the timing without the calculation is required, processing load can be easily reduced and the structure can be easily simplified.

While the functions are realized in the form of programs in the above description, the functions may be realized in any form including hardware such as a circuit board or elements such as IC (Integrated Circuit). In view of easy handling and promotion of the use, the functions are preferably stored and read from programs or recording media.

In the second embodiment, one of the travel routes is selected from the plurality of travel routes as in the case of the processing for travel route search and time to notify the departure guidance is controlled based on the travel route in the processing for departure guidance notification. However, for example, configuration where one travel route with shortest time or with shortest distance is set in step S506 and then in step S511 the predicted required time is monitored without having the processing where the terminal unit 400 selects the route may be applicable.

Configuration where the guidance notifying section 183 is provided in the server 500 to send the departure guidance information to the terminal unit 400 at the notification timing, and the terminal unit 400 simply receives the departure guidance may be also applicable. Such configuration can further simplify the structure of the terminal unit 400. Accordingly, the mobile phone as the terminal unit 400 can be used more easily.

As for the detection of the departure ready state, without limiting to the detection by the sensor 110 in the terminal unit 400, the server 500 may recognize the departure ready state based on state responding to a signal that the server 500 sends. This configuration can further simplify the structure of the terminal unit 400 and improves easiness of the use of the mobile phone.

Although the server 500 stores the map information and the traffic-congestion prediction table 10, the terminal unit 400 may alternatively store at least either the map information or the traffic-congestion prediction table 10.

While the transceiver 410 is arranged in the terminal unit 400 in the above description, the transceiver 410 may be separated from the terminal unit 400 and, for example, a mobile phone or a PHS may be used as the transceiver 410. In this case, the terminal unit 400 is connected to the transceiver 410 to send/receive information when necessary. Further, as mentioned earlier, the terminal unit 400 itself may be a mobile phone or a PHS.

Although the configuration with the use of the mobile communication device is included in the above description, configuration without the use of the mobile communication device may be also applicable.

The arrangements and the operating procedures for the present invention may be appropriately modified as long as the scope of the present invention can be attained.

### [Advantages of Embodiments]

As previously mentioned, in the above embodiments, the predicted required time for the vehicle to arrive at the destination from the current-position is computed based on the current-position information, the destination information and the map information; the predicted departure time for the vehicle to leave is computed based on the predicted required time and the preset scheduled time to arrive at the destination; the departure waiting state of the vehicle at the departure point is recognized; and the time to notify the departure guidance for encouraging the vehicle to leave is changed according to the departure waiting state. With this configuration, departure guidance for traveling to the destination can be appropriately notified based on the departure state of the user, thereby avoiding arriving at the destination too early or late.

As previously mentioned, in the above embodiments, the predicted required time for the vehicle to arrive at the destination from the current-position is computed based on the current-position information, the destination information and the map information; the predicted departure time for the vehicle to leave is computed based on the predicted required time and the preset scheduled time to arrive at the destination; the departure waiting state of the vehicle at the departure point is recognized; the time to notify the departure guidance for encouraging the vehicle to leave is set according to the departure waiting state; and the departure guidance is notified at the set time to notify. With this configuration, departure guidance for traveling to the destination can be appropriately notified based on the departure state of the user, thereby avoiding arriving at the destination too early or late.

## Claims

1. A guiding device (100), comprising :
a map information acquirer (180) for acquiring map information;
a current-position information acquirer (181) for acquiring current-position information about a current-position of a mobile body;
a destination information acquirer (182) for acquiring destination information about a position of a destination to which the mobile body moves;
a timer (191) for clocking time;
a scheduled time information acquirer (188) for acquiring scheduled time information about scheduled time to arrive at the destination;
a predicted required time calculator (188) for calculating predicted required time for the mobile body to arrive at the destination from the current-position based on the current-position information, the destination information and the map information;
a predicted departure time calculator (188) for calculating predicted departure time for the mobile body to leave the current-position based on the scheduled time information and the predicted required time;
a notification information generator (183) for generating departure notification information encouraging departure of the mobile body based on the predicted departure time and current time clocked by the timer (191),
the guidance device (100) being **characterised by** further comprising:
a departure waiting state recognizer (110) for recognizing departure waiting state indicating whether the mobile body can depart immediately or not at the current-position; and
a notification controller (183) for setting a time for a notifying section to notify the departure notification information according to the departure waiting state and making the notifying section notify the departure notification information based on the set time and the current time.

2. The guiding device according to claim 1, wherein the notification controller (183) changes the set time for notifying the departure notification information according to the departure waiting state.

3. The guiding device according to claim 1 or 2, wherein
the guiding device (100) is removably attached to the mobile body,
the departure waiting state recognizer (110) recognizes whether the guiding device is attached to the mobile body, and
the notification controller (183) controls time for the notifying section to notify the departure guidance information when the departure waiting state recognizer (110) recognizes that the guiding device (100) is not attached to the mobile body earlier than time for the notifying section to notify the departure guidance information when the departure waiting state recognizer (110) recognizes that the guiding device (100) is attached to the mobile body.

4. The guiding device (100) according to claim 3, further comprising:
a terminal position recognizer (180) for recognizing a current-position when the departure waiting state recognizer (110) recognizes that the guiding device (100) is not attached to the mobile body; and
a terminal arrival time calculator (188) for calculating terminal predicted required time for the mobile body to arrive at a current-position of the mobile body from the current-position of the guiding device (100) based on the current-position recognized by the terminal position recognizer (180), the current-position information acquired by the current-position information acquirer (181) and the map information, when the departure waiting state recognizer (110) recognizes that the guiding device (100) is not attached to the mobile body,
wherein the notification controller (103) controls the notifying section to notify the departure notification information early based on predicted required time calculated by the terminal arrival time calculator (188).

5. The guiding device (100) according to claim 1 or 2, wherein
the notifying section is removably attached to the mobile body,
the departure waiting state recognizer (110) recognizes whether the notifying section is attached, and
the notification controller (183) controls time for the notifying section to notify the departure guidance information when the departure waiting state recognizer (110) recognizes that the notifying section is not attached to the mobile body earlier than time for the notifying section to notify the departure guidance information when the departure waiting state recognizer (110) recognizes that the notifying section is attached to the mobile body.

6. The guiding device (100) according to claim 5, further comprising:
a terminal position information acquirer (181) for acquiring terminal position information about a current-position of the notifying section; and
a terminal arrival time calculator (188) for calculating predicted required time for the notifying section to arrive at a position of the mobile body based on the terminal position information, the current-position information and the map information, when the departure waiting state recognizer (110) recognizes that the notifying section is not attached to the mobile body,
wherein the notification controller (183) controls the notifying section to notify the departure notification information early based on predicted required time calculated by the terminal arrival time calculator (188).

7. The guiding device (100) according to claim 1 or 2, wherein
the departure waiting state recognizer (110) recognizes operation state of a component for moving a mobile body or power supply state,
the notification controller (183) controls time for the notifying section to notify the departure guidance information when the departure waiting state recognizer (110) recognizes operation state in which the component is stopped or supply state in which the power supply is stopped earlier than time for the notifying section to notify the departure guidance information when the departure waiting state recognizer (110) recognizes operation state in which the component is operated or supply state in which power is supplied.

8. The guiding device (103) according to any one of claims 1 to 7, further comprising a traffic information acquirer (120) for acquiring traffic information about a traffic condition of the mobile body,
wherein the predicted required time calculator (188) calculates predicted required time for the mobile body to arrive at the destination from the current-position based on the current-position information, the destination information and the map information as well as the traffic information.

9. The guiding device according to claim 8, wherein the predicted required time calculator (188) recognizes a change in the traffic information, and calculates the predicted required time again every time the traffic information changes.

10. The guiding device (100) according to claim 8 or 9, wherein the traffic information is at least either current traffic information about a traffic condition at the current time or traffic prediction information about a change of a traffic condition over time based on a statistical traffic condition obtained by statistically processing past traffic conditions based on time factors.

11. The guiding device (100) according to any one of claims 1 to 10, further comprising a notification time information (188) acquirer for acquiring notification time request information requesting time for the notifying section to notify the departure notification information according to departure waiting state of the mobile body at the current-position,
wherein the notification controller (183) changes time for the notifying section to notify the departure notification information according to the departure waiting state recognized by the departure waiting state recognizer (110) based on the notification time request information.

12. The guiding device (100) according to any one of claims 1 to 11, wherein the predicted required time calculator (188) computes a travel route for the mobile body based on the current-position information, the destination information and the map information, and calculates predicted required time for the mobile body to travel on the travel route.

13. A guiding system, comprising:
a server (500) having a storage for storing map information (590); and
the guiding device (100) according to any one of claims 1 to 12 for acquiring the map information from the server over a network.

14. A guiding system, comprising:
the guiding device (100) according to any one of claims 1 to 12; and
a terminal unit (400) connected to the guiding device over a network (300) so as to communicate therewith, the terminal unit (400) including a notifying section (140, 150) for notifying the departure notification information acquired from the guiding device over the network.

15. A guiding system, comprising :
a terminal unit (400) having a request information generator for generating notification request information requesting notification of scheduled time information about scheduled time for a mobile body to arrive at a destination and notification for encouraging departure of the mobile body to arrive at the destination at the scheduled time, and a notifying section for notifying departure notification information for encouraging the departure of the mobile body; and
a server (500) to which the terminal unit is connected so as to communicate therewith over a network (300), the server (500) having a storage for storing map information (540), a current-position information acquirer (181) for acquiring current-position information about a current-position of the mobile body, a destination information acquirer (182) for acquiring destination information about a position of a destination to which the mobile body moves, a predicted required time calculator (188) for calculating predicted required time for the mobile body to arrive at the destination from the current-position based on the current-position information, the destination information and the map information, and a predicted departure time calculator (188) for calculating predicted departure time for the mobile body to leave the current-position based on the scheduled time information and the predicted required time,
the guiding system being **characterised in that** at least either one of the terminal unit (400) for the server (500) has at least either one of a departure waiting state recognizer (110) for recognizing a departure waiting state indicating whether the mobile body can depart immediately or not at the current-position and a notification controller (403) for setting time for a notifying section of the terminal unit to notify information encouraging departure of the mobile body according to the departure waiting state.

16. A guiding method, comprising:
acquiring map information, current-position information about a current-position of a mobile body, destination information about a position of a destination to which the mobile body travels, and scheduled time information about scheduled time for the mobile body to arrive at the destination;
calculating predicted required time for the mobile body to arrive at the destination from the current-position based on the current-position information, the destination information and the map information;
calculating predicted departure time for the mobile body to leave the current-position based on the calculated predicted required time and the scheduled time information;
generating departure notification information encouraging departure of the mobile body based on the calculated predicted departure time and current time clocked by a timer,
the guiding method being **characterised by** further comprising:
detecting departure waiting state indicating whether the mobile body can depart immediately or not at the current-position, and setting a time for a notifying section to notify the departure notification information according to the departure waiting state; and
making the notifying section notify the departure notification information based on the set time.

17. The guiding method according to claim 6, wherein the set time for notifying the departure notification information is changed according to the departure waiting state.

18. A guiding program executing the guiding method according to claim 16 or 17 by a computer.

19. A recording medium storing the guiding program according to claim 18 in a manner readable by a computer.

## Patentansprüche

1. Führungsvorrichtung (100), umfassend:
eine Karteninformations-Akquisitionseinrichtung (188) zum Akquirieren von Karteninformationen,
eine Akquisitionseinrichtung (181) für aktuelle Positionsinformation zum Akquirieren aktueller Positionsinformation über eine aktuelle Position eines mobilen Körpers,
eine Zielinformations-Akquisitionseinrichtung (182) zum Akquirieren von Zielinformation über eine Position eines Ziels, zu dem sich der mobile Körper bewegt,
einen Zeitgeber (191) zur Zeittakterzeugung,
eine Planungszeitinformations-Akquisitionseinrichtung (198) zum Akquirieren der Planungszeitinformation über die eingeplante Zeit, um das Ziel zu erreichen,
einen Kalkulator (188) für hervorgesagt erforderliche Zeit zum Berechnen einer hervorgesagt erforderlichen Zeit für den mobilen Körper, um von der aktuellen Position das Ziel zu erreichen, auf Basis der aktuellen Positionsinformation, der Zielinformation und der Karteninformation,
einen Kalkulator (188) für die hervorgesagte Abfahrts-/Abflugzeit zum Berechnen einer hervorgesagten Abfahrts-/Abflugzeit für den mobilen Körper, um die aktuelle Position zu verlassen, auf Basis der Planungszeitinformation und der hervorgesagt erforderlichen Zeit,
einen Benachrichtigungsinformations-Generator (183) zum Erzeugen von Abfahrts-/Abflugbenachrichtigungsinformation, die Abfahrt/Abflug des mobilen Körpers empfiehlt, auf Basis der hervorgesagten Abfahrts-/Abflugzeit und der durch den Zeitgeber (191) getakteten aktuellen Zeit,
wobei die Führungsvorrichtung (100) **dadurch gekennzeichnet ist, dass** sie des Weiteren umfasst:
eine Abfahrts-/Abflugwartezustands-Erkennungseinrichtung (110) zum Erkennen des Abfahrts-/Abflugwartezustands, der anzeigt, ob der mobile Körper auf der aktuellen Position sofort abfahren bzw. starten kann oder nicht,
einen Benachrichtigungskontroller (183) zum Einstellen eines Zeitpunkts für einen Benachrichtigungsabschnitt, um die Abfahrts-/Abflugbenachrichtigungsinformation entsprechend dem Abfahrts-/Abflugwartezustand zu melden und den Benachrichtigungsabschnitt zu veranlassen, die Abfahrts-/Abflugbenachrichtigungsinformation auf Basis der eingestellten Zeit und der aktuellen Zeit mitzuteilen.

2. Führungsvorrichtung nach Anspruch 1, wobei der Benachrichtigungskontroller (183) die eingestellte Zeit zum Mitteilen der Abfahrts-/Abflugbenachrichtigungsinformation entsprechend dem Abfahrts-/Abflugwartezustand ändert.

3. Führungsvorrichtung nach Anspruch 1 oder 2, wobei
die Führungsvorrichtung (100) ablösbar an dem mobilen Körper angebracht ist,
die Abfahrts-/Abflugwartezustands-Erkennungseinrichtung (110) erkennt, ob die Führungsvorrichtung an dem mobilen Körper angebracht ist, und
der Benachrichtigungskontroller (183) den Zeitpunkt für den Benachrichtigungsabschnitt, die Abfahrts-/Abflugführungsinformation mitzuteilen, wenn die Abfahrts-/Abflugwartezustands-Erkennungseinrichtung (110) erkennt, dass die Führungsvorrichtung (100) nicht an dem mobilen Körper angebracht ist, früher als den Zeitpunkt für den Benachrichtigungsabschnitt, die Abfahrts-/Abflugführungsinformation mitzuteilen, wenn die Abfahrts-/Abflugwartezustands-Erkennungseinrichtung (110) erkennt, dass die Führungsvorrichtung (100) an dem mobilen Körper angebracht ist, einrichtet.

4. Führungsvorrichtung (100) nach Anspruch 3, des Weiteren umfassend:
eine Endgerätpositionserkennungseinrichtung (180) zum Erkennen einer aktuellen Position, wenn die Abfahrts-/Abflugwartezustands-Erkennungseinrichtung (110) erkennt, dass die Führungsvorrichtung (100) nicht an dem mobilen Körper angebracht ist, und
einen Endgerätankunftszeitkalkulator (188) zum Berechnen der endgeräthervorgesagten erforderlichen Zeit für den mobilen Körper, um von der aktuellen Position der Führungsvorrichtung (100) eine aktuelle Position des mobilen Körpers zu erreichen, auf Basis der durch die EndgerätpositionsErkennungseinrichtung (180) erkannten aktuellen Position, der durch die Akquisitionseinrichtung (181) für aktuelle Positionsinformation akquirierten aktuellen Positionsinformation und der Karteninformation, wenn die Abfahrts-/Abflugwartezustands-Erkennungseinrichtung (110) erkennt, dass die Führungsvorrichtung (100) nicht an dem mobilen Körper angebracht ist,
wobei der Benachrichtigungskontroller (103) den Benachrichtigungsabschnitt steuert, um Abfahrts-/Abflugbenachrichtigungsinformation früh, auf Basis der durch den Endgerät-Ankunftszeitkalkulator (188) berechneten hervorgesagt erforderlichen Zeit, mitzuteilen.

5. Führungsvorrichtung (100) nach Anspruch 1 oder 2, wobei
der Benachrichtigungsabschnitt ablösbar an dem mobilen Körper angebracht ist,
die Abfahrts-/Abflugwartezustands-Erkennungseinrichtung (110) erkennt, ob der Benachrichtigungsabschnitt angebracht ist, und
der Benachrichtigungskontroller (183) den Zeitpunkt für den Benachrichtigungsabschnitt, die Abfahrts-/Abflugführungsinformation mitzuteilen, wenn die Abfahrts-/Abflugwartezustands-Erkennungseinrichtung (110) erkennt, dass der Benachrichtigungsabschnitt nicht an dem mobilen Körper angebracht ist, früher als den Zeitpunkt für den Benachrichtigungsabschnitt die Abfahrts-/Abflugführungsinformation mitzuteilen, wenn die Abfahrts-/Abflugwartezustands-Erkennungseinrichtung (110) erkennt, dass der Benachrichtigungsabschnitt an dem mobilen Körper angebracht ist, einrichtet.

6. Führungsvorrichtung (100) nach Anspruch 5, des Weiteren umfassend:
eine Endgerätpositionsinformations-Akquisitionseinrichtung (181) zum Akquirieren von Endgerätpositionsinformation über eine aktuelle Position des Benachrichtigungsabschnitts und
einen Endgerät-Ankunftszeitkalkulator (188) zum Berechnen der erforderlichen Zeit für den Benachrichtigungsabschnitt, um eine aktuelle Position des mobilen Körpers zu erreichen, auf Basis der Endgerätpositionsinformation, der aktuellen Positionsinformation und der Karteninformation, wenn die Abfahrts-/Abflugwartezustands-Erkennungseinrichtung (110) erkennt, dass der Benachrichtigungsabschnitt nicht an dem mobilen Körper angebracht ist,
wobei der Benachrichtigungskontroller (103) den Benachrichtigungsabschnitt steuert, um Abfahrts-/Abflugbenachrichtigungsinformation früh, auf Basis der durch den Endgerät-Ankunftszeitkalkulator (188) hervorgesagt erforderlichen Zeit, mitzuteilen.

7. Führungsvorrichtung (100) nach Anspruch 1 oder 2, wobei die Abfahrts-/AbflugWartezustands-Erkennungseinrichtung (110) den Betriebszustand einer Komponente zum Bewegen eines mobilen Körpers oder einen Leistungsversorgungszustand erkennt,
der Benachrichtigungskontroller (183) den Zeitpunkt für den Benachrichtigungsabschnitt zum Mitteilen der Abfahrts-/Abflugführungsinformation, wenn die Abfahrts-/Abflugwartezustands-Erkennungseinrichtung (110) den Betriebszustand, in dem die Komponente angehalten wird, oder den Versorgungszustand, in dem die Leistungsversorgung unterbrochen ist, erkennt, früher als den Zeitpunkt für den Benachrichtigungsabschnitt zum Mitteilen der Abfahrts- /Abflugführungsposition, wenn die Abfahrts-/Abflugwartezustands-Erkennungseinrichtung (110) den Betriebszustand, in dem die Komponente betrieben wird, oder den Versorgungszustand, in dem Leistung zugeführt wird, erkennt, einrichtet.

8. Führungsvorrichtung (100) nach einem der Ansprüche 1 bis 7, die des Weiteren eine Verkehrsinformations-Akquisitionseinrichtung (120) zum Akquirieren von Verkehrsinformation über einen Verkehrszustand des mobilen Körpers umfasst,
wobei der Kalkulator (188) für hervorgesagt erforderliche Zeit hervorgesagt erforderliche Zeit für den mobilen Körper, um das Ziel von der aktuellen Position zu erreichen, auf Basis der aktuellen Positionsinformation, der Zielinformation und der Karteninformation sowie der Verkehrsinformation berechnet.

9. Führungsvorrichtung nach Anspruch 8, wobei der Kalkulator (188) für hervorgesagt erforderliche Zeit, eine Änderung in der Verkehrsinformation erkennt und die hervorgesagt erforderliche Zeit jedes Mal, wenn sich die Verkehrsinformation ändert, neu berechnet.

10. Führungsvorrichtung (100) nach Anspruch 8 oder 9, wobei die Verkehrsinformation wenigstens entweder aktuelle Verkehrsinformation über einen Verkehrszustand zu der aktuellen Zeit ist oder eine Verkehrsvorhersageinformation über eine Änderung eines Verkehrszustands über die Zeit auf Basis eines statistischen Verkehrszustands ist, der durch statistisches Verarbeiten vorheriger Verkehrszustände auf Basis von Zeitfaktoren erhalten wurde.

11. Führungsvorrichtung (100) nach einem der Ansprüche 1 bis 10, die des Weiteren eine Benachrichtigungszeitinformations-Akquisitionseinrichtung (188) zum Akquirieren von Benachrichtigungszeit-Anforderungsinformation, die Zeit für den Benachrichtigungsabschnitt zum Mitteilen der Abfahrts-/Abflugbenachrichtigungsinformation entsprechend dem Abfahrts-/Abflugwartezustand des mobilen Körpers auf der aktuellen Position anfordert.

12. Führungsvorrichtung (100) nach einem der Ansprüche 1 bis 11, wobei der Kalkulator (188) für hervorgesagt erforderliche Zeit auf Basis der aktuellen Positionsinformation, der Zielinformation und der Karteninformation eine Reiseroute für den mobilen Körper berechnet und die hervorgesagt erforderliche Zeit für den mobilen Körper zum Befahren/Fliegen der Reiseroute berechnet.

13. Führungssystem, umfassend:
einen Server (500) mit einem Speicher zum Speichern von Karteninformation (590) und
die Führungsvorrichtung (100) nach einem der Ansprüche 1 bis 12 zum Akquirieren der Karteninformation von dem Server über ein Netzwerk.

14. Führungssystem, umfassend:
die Führungsvorrichtung (100) nach einem der Ansprüche 1 bis 12 und
eine Endgeräteinheit (400), die über ein Netzwerk (300) mit der Führungsvorrichtung verbunden ist, um damit zu kommunizieren, wobei die Endgeräteinheit (400) einen Benachrichtigungsabschnitt (140, 150) zum Mitteilen der durch die Führungseinrichtung über das Netzwerk akquirierten Abfahrts-/Abflugbenachrichtigungsinformation enthält.

15. Führungssystem, umfassend:
eine Endgeräteinheit (400) mit einem Anforderungsinformationsgenerator zum Erzeugen von Anzeigeanforderungsinformation, die Mitteilung der Planungszeitinformation über für einen mobilen Körper geplante Zeit, um ein Ziel zu erreichen, und Mitteilung, die die Abfahrt bzw. den Start des mobilen Körpers, um das Ziel in der geplanten Zeit zu erreichen, anfordert, und einem Benachrichtigungsabschnitt zum Mitteilen von Abfahrts-/Abflugbenachrichtigungsinformation, die die Abfahrt bzw. den Start des beweglichen Körpers empfiehlt, und
einen Server (500), mit dem die Endgeräteinrichtung verbunden ist, um damit über ein Netzwerk (300) zu kommunizieren, wobei der Server (500) enthält: eine Speichereinheit zum Speichern von Karteninformation (540), eine Akquisitionseinrichtung (181) für aktuelle Positionsinformation zum Akquirieren von aktueller Positionsinformation über eine aktuelle Position des mobilen Körpers, eine Zielinformations-Akquisitionseinrichtung (182) zum Akquirieren von Zielinformation über eine Position eines Ziels, zu dem sich der mobile Körper bewegt, und einen Kalkulator (189) für hervorgesagt erforderliche Zeit zum Berechnen einer hervorgesagt erforderlichen Zeit für den mobilen Körper, um von der aktuellen Position das Ziel zu erreichen, auf Basis der aktuellen Positionsinformation, der Zielinformation und der Karteninformation, und einen Kalkulator (188) für die hervorgesagte Abfahrts-/Abflugzeit zum Berechnen einer hervorgesagten Abfahrts-/Abflugzeit für den mobilen Körper, um die aktuelle Position zu verlassen, auf Basis der Planungszeitinformation und der hervorgesagt erforderlichen Zeit,
und wobei das Führungssystem **dadurch gekennzeichnet ist, dass** wenigstens eines von der Endgeräteinheit (400) oder dem Server (500) wenigstens eines hat von einer Abfahrts-/Abflugwartezustands-Erkennungseinrichtung (110) zum Erkennen eines Abfahrts-/Abflugwartezustands, der anzeigt, ob der mobile Körper auf der aktuellen Position sofort abfahren bzw. starten kann oder nicht, und einem Benachrichtigungskontroller (103) zum Einstellen von Zeit für einen Benachrichtigungsabschnitt der Endgeräteinheit, um Information mitzuteilen, die Abfahrt/Abflug des mobilen Körpers entsprechend dem Abfahrts-/Abflugwartezustand empfiehlt.

16. Führungsverfahren, umfassend:
Akquirieren von Karteninformation, aktuellen Positionsinformationen über eine aktuelle Position des mobilen Körpers, Zielinformation über eine Position, zu der sich der mobile Körper bewegt, und Planungszeitinformation über geplante Zeit für den mobilen Körper, um das Ziel zu erreichen,
Berechnen der hervorgesagt erforderlichen Zeit für den mobilen Körper, um das Ziel von der aktuellen Position zu erreichen, auf Basis der aktuellen Positionsinformation, der Zielinformation und der Karteninformation,
Berechnen der hervorgesagten Abfahrts-/Abflugzeit für den mobilen Körper, um die aktuelle Position zu verlassen, auf Basis der berechneten hervorgesagt erforderlichen Zeit und der Planungszeitinformation, und
Erzeugen der Abfahrts-/Abflugbenachrichtigungsinformation, die die Abfahrt bzw. den Start des mobilen Körpers empfiehlt, auf Basis der berechneten hervorgesagten Abfahrts-/Abflugzeit und der durch einen Zeitgeber getakteten aktuellen Zeit,
wobei das Führungsverfahren **dadurch gekennzeichnet ist, dass** es des Weiteren umfasst:
Erkennen des Abfahrts-/Abflugwartezustands, der anzeigt, ob der mobile Körper auf der aktuellen Position sofort abfahren bzw. starten kann oder nicht, und Einrichten einer Zeit für einen Benachrichtigungsabschnitt zum Mitteilen der Abfahrts-/Abflugbenachrichtigungsinformation entsprechend dem Abfahrts-/Abflugwartezustand und
Veranlassen, dass der Benachrichtigungsabschnitt die Abfahrts-/Abflugbenachrichtigungsinformation auf Basis des eingestellten Zeitpunkts mitteilt.

17. Führungsverfahren nach Anspruch 6, wobei die zum Anzeigen der Abfahrts-/Abflugbenachrichtigungsinformation eingestellte Zeit entsprechend dem Abfahrts-/Abflugwartezustand geändert wird.

18. Führungsprogramm, das das Führungsverfahren nach Anspruch 16 oder 17 durch einen Computer ausführt.

19. Aufzeichnungsmedium, das das Führungsprogramm nach Anspruch 18 in einer durch einen Computer lesbaren Art speichert.

## Revendications

1. Dispositif de guidage (100), comprenant:
un module d'acquisition d'informations de localisation géographique (188), pour acquérir des informations de localisation géographique ;
un module d'acquisition d'informations de position actuelle (181), pour acquérir des informations de position actuelle relatives à une position actuelle d'un corps en mouvement ;
un module d'acquisition d'informations de destination (182), pour acquérir des informations de destination relatives à une position de destination vers laquelle le corps en mouvement se déplace ;
un compteur de temps (191), pour compter le temps ;
un module d'acquisition d'informations d'heure prévue (188), pour acquérir des informations d'heure prévue relatives à une heure prévue pour arriver à la destination ;
un module de calcul de temps nécessaire prédit (188), pour calculer un temps nécessaire prédit pour que le corps en mouvement arrive à la destination à partir de la position actuelle en se basant sur les informations de position actuelle, sur les informations de destination et sur les informations de localisation géographique ;
un module de calcul d'heure de départ prédite (188), pour calculer une heure de départ prédite pour que le corps en mouvement quitte la position actuelle en se basant sur les informations d'heure prévue et sur le temps nécessaire prédit ;
un module de génération d'informations de notification (183), pour générer des informations de notification de départ encourageant le départ du corps en mouvement en se basant sur l'heure de départ prédite et sur l'heure actuelle comptée par le compteur de temps (191) ;
le dispositif de guidage (100) étant **caractérisé en ce qu'**il comprend par ailleurs :
un module de reconnaissance d'état en attente de départ (110), pour reconnaître un état en attente de départ indiquant si le corps en mouvement peut - ou non - partir immédiatement au niveau de la position actuelle ; et
un module de commande de notification (183), pour définir une heure à laquelle une section de notification doit notifier les informations de notification de départ en fonction de l'état en attente de départ, et pour amener la section de notification à notifier les informations de notification de départ en se basant sur l'heure définie et sur l'heure actuelle.

2. Dispositif de guidage selon la revendication 1, dans lequel le module de commande de notification (183) change l'heure définie pour la notification des informations de notification de départ en fonction de l'état en attente de départ.

3. Dispositif de guidage selon la revendication 1 ou 2,
dans lequel:
le dispositif de guidage (100) est monté de façon amovible sur le corps en mouvement,
le module de reconnaissance d'état en attente de départ (110) reconnaît si le dispositif de guidage est monté - ou non - sur le corps en mouvement; et
le module de commande de notification (183) règle l'heure à laquelle la section de notification doit notifier les informations de notification de départ quand le module de reconnaissance d'état en attente de départ (110) reconnaît que le dispositif de guidage (100) n'est pas monté sur le corps en mouvement plus tôt que l'heure à laquelle la section de notification doit notifier les informations de notification de départ quand le module de reconnaissance d'état en attente de départ (110) reconnaît que le dispositif de guidage (100) est monté sur le corps en mouvement.

4. Dispositif de guidage (100) selon la revendication 3, comprenant par ailleurs:
un module de reconnaissance de position terminale (180), pour reconnaître une position actuelle quand le module de reconnaissance d'état en attente de départ (110) reconnaît que le dispositif de guidage (100) n'est pas monté sur le corps en mouvement ; et
un module de calcul d'heure d'arrivée terminale (188), pour calculer le temps nécessaire prédit terminal pour que le corps en mouvement arrive à une position actuelle du corps en mouvement à partir de la position actuelle du dispositif de guidage (100) en se basant sur la position actuelle reconnue par le module de reconnaissance de position terminale (180), sur les informations de position actuelle acquises par le module d'acquisition d'informations de position actuelle (181), et sur les informations de localisation géographique, quand le module de reconnaissance d'état en attente de départ (110) reconnaît que le dispositif de guidage (100) n'est pas monté sur le corps en mouvement,
dans lequel le module de commande de notification (183) commande à la section de notification de notifier les informations de notification de départ plus tôt, en se basant sur le temps nécessaire prédit calculé par le module de calcul d'heure d'arrivée terminale (188).

5. Dispositif de guidage (100) selon la revendication 1 ou 2, dans lequel :
la section de notification est montée de façon amovible sur le corps en mouvement,
le module de reconnaissance d'état en attente de départ (110) reconnaît si la section de notification est montée - ou non - sur le corps en mouvement ; et
le module de commande de notification (183) règle l'heure à laquelle la section de notification doit notifier les informations de notification de départ quand le module de reconnaissance d'état en attente de départ (110) reconnaît que la section de notification n'est pas montée sur le corps en mouvement plus tôt que l'heure à laquelle la section de notification doit notifier les informations de notification de départ quand le module de reconnaissance d'état en attente de départ (110) reconnaît que la section de notification est montée sur le corps en mouvement.

6. Dispositif de guidage (100) selon la revendication 5, comprenant par ailleurs :
un module d'acquisition d'informations de position terminale (181), pour acquérir des informations de position terminale relatives à une position actuelle de la section de notification ; et
un module de calcul d'heure d'arrivée terminale (188), pour calculer un temps nécessaire prédit pour que la section de notification arrive à une position du corps en mouvement en se basant sur les informations de position terminale, sur les informations de position actuelle, et sur les informations de localisation géographique, quand le module de reconnaissance d'état en attente de départ (110) reconnaît que la section de notification n'est pas montée sur le corps en mouvement,
dans lequel le module de commande de notification (183) commande à la section de notification de notifier les informations de notification de départ plus tôt en se basant sur le temps nécessaire prédit calculé par le module de calcul d'heure d'arrivée terminale (188).

7. Dispositif de guidage (100) selon la revendication 1 ou 2, dans lequel :
le module de reconnaissance d'état en attente de départ (110) reconnaît un état de fonctionnement d'un composant pour déplacer un corps en mouvement, ou bien un état de fourniture de puissance,
le module de commande de notification (183) règle l'heure à laquelle la section de notification doit notifier les informations de notification de départ quand le module de reconnaissance d'état en attente de départ (110) reconnaît un état de fonctionnement dans lequel le composant est arrêté, ou bien un état de fourniture de puissance dans lequel la fourniture de puissance est arrêtée plus tôt que l'heure à laquelle la section de notification doit notifier les informations de notification de départ quand le module de reconnaissance d'état en attente de départ (110) reconnaît un état de fonctionnement dans lequel le composant est en fonctionnement, ou bien un état de fourniture de puissance dans lequel une puissance est fournie.

8. Dispositif de guidage (100) selon l'une quelconque des revendications 1 à 7, comprenant par ailleurs :
un module d'acquisition d'informations de circulation (120), pour acquérir des informations de circulation relatives à des conditions de circulation du corps en mouvement,
dans lequel le module de calcul de temps nécessaire prédit (188) calcule un temps nécessaire prédit pour que le corps en mouvement arrive à la destination à partir de la position actuelle en se basant sur les informations de position actuelle, sur les informations de destination, et sur les informations de localisation géographique, ainsi que sur les informations de circulation.

9. Dispositif de guidage selon la revendication 8, dans lequel le module de calcul de temps nécessaire prédit (188) reconnaît un changement dans les informations de circulation, et calcule une nouvelle fois le temps nécessaire prédit chaque fois que les informations de circulation changent.

10. Dispositif de guidage (100) selon la revendication 8 ou 9, dans lequel les informations de circulation sont au moins des informations de circulation actuelles relatives à des conditions de circulation à l'heure actuelle, ou bien des informations de prédiction de circulation relatives à un changement des conditions de circulation à mesure que le temps passe, en se basant sur des conditions de circulation statistiques obtenues au moyen d'un traitement statistique de conditions de circulation passées basé sur des facteurs de temps.

11. Dispositif de guidage (100) selon l'une quelconque des revendications 1 à 10, comprenant par ailleurs :
un module d'acquisition d'informations d'heure de notification (188), pour acquérir des informations de demande d'heure de notification qui demandent une heure à laquelle la section de notification doit notifier les informations de notification de départ en fonction d'un état en attente de départ du corps en mouvement au niveau de la position actuelle,
dans lequel le module de commande de notification (183) change l'heure à laquelle la section de notification doit notifier les informations de notification de départ en fonction de l'état en attente de départ reconnu par le module de reconnaissance d'état en attente de départ (110) en se basant sur les informations de demande d'heure de notification.

12. Dispositif de guidage (100) selon l'une quelconque des revendications 1 à 11, dans lequel le module de calcul de temps nécessaire prédit (188) calcule une route de circulation pour le corps en mouvement en se basant sur les informations de position actuelle, sur les informations de destination et sur les informations de localisation géographique, et calcule un temps nécessaire prédit pour que le corps en mouvement se déplace sur la route de circulation.

13. Système de guidage, comprenant :
un serveur (500) comprenant une capacité de stockage pour stocker des informations de localisation géographique (540) ; et
le dispositif de guidage (100) selon l'une quelconque des revendications 1 à 12, pour acquérir les informations de localisation géographique à partir du serveur par le biais d'un réseau.

14. Système de guidage, comprenant :
le dispositif de guidage (100) selon l'une quelconque des revendications 1 à 12 ; et
un module terminal (400) relié au dispositif de guidage par le biais d'un réseau (300) de façon à communiquer avec lui, le module terminal (400) comprenant une section de notification (140, 150) pour notifier les informations de notification de départ acquises à partir du dispositif de guidage par le biais du réseau.

15. Système de guidage, comprenant :
un module terminal (400) comprenant un module de génération d'informations de demande, pour générer des informations de demande de notification demandant une notification d'informations d'heure prévue relatives à une heure prévue pour qu'un corps en mouvement arrive à une destination, et une notification pour encourager le départ du corps en mouvement de façon à ce qu'il arrive à la destination à l'heure prévue, et une section de notification pour notifier des informations de notification de départ pour encourager le départ du corps en mouvement ; et
un serveur (500) auquel le module terminal est connecté de façon à communiquer avec lui par le biais d'un réseau (300), le serveur (500) comprenant une capacité de stockage pour stocker des informations de localisation géographique (540), un module d'acquisition d'informations de position actuelle (181) pour acquérir des informations de position actuelle relatives à une position actuelle du corps en mouvement, un module d'acquisition d'informations de destination (182) pour acquérir des informations de destination relatives à une position d'une destination vers laquelle le corps en mouvement se déplace, un module de calcul de temps nécessaire prédit (188) pour calculer le temps nécessaire prédit pour que le corps en mouvement arrive à la destination à partir de la position actuelle en se basant sur les informations de position actuelle, sur les informations de destination, et sur les informations de localisation géographique, et un module de calcul d'heure de départ prédite (188), pour calculer une heure de départ prédite pour que le corps en mouvement quitte la position actuelle en se basant sur les informations d'heure prévue et sur le temps nécessaire prédit,
le système de guidage étant **caractérisé en ce que** au moins l'un d'entre le module terminal (400) ou le serveur (500) comprend au moins soit l'un d'entre un module de reconnaissance d'état en attente de départ (110) pour reconnaître un état en attente de départ indiquant si le corps en mouvement peut - ou non - partir immédiatement au niveau de la position actuelle et d'un module de commande de notification (183) pour définir une heure à laquelle une section de notification du module terminal doit notifier des informations encourageant le départ du corps en mouvement en fonction de l'état en attente de départ.

16. Procédé de guidage comprenant les étapes consistant à:
acquérir des informations de localisation géographique, des informations de position actuelle relatives à une position actuelle d'un corps en mouvement, des informations de destination relatives à une position d'une destination vers laquelle le corps en mouvement se déplace, et des informations d'heure prévue relatives à l'heure prévue pour que le corps en mouvement arrive à la destination ;
calculer un temps nécessaire prédit pour que le corps en mouvement arrive à la destination à partir de la position actuelle en se basant sur les informations de position actuelle, sur les informations de destination et sur les informations de localisation géographique ;
calculer une heure de départ prédite pour que le corps en mouvement quitte la position actuelle en se basant sur le temps nécessaire prédit calculé et sur les informations d'heure prévue ;
générer des informations de notification de départ encourageant le départ du corps en mouvement en se basant sur l'heure de départ prédite calculée et sur l'heure actuelle comptée par le compteur de temps,
le procédé de guidage étant **caractérisé en ce qu'**il comprend par ailleurs les étapes consistant à :
détecter un état en attente de départ indiquant si le corps en mouvement peut - ou non - partir immédiatement au niveau de la position actuelle, et définir une heure à laquelle une section de notification doit notifier des informations de notification de départ en fonction de l'état en attente de départ ; et
amener la section de notification à notifier les informations de notification de départ en se basant sur l'heure définie.

17. Procédé de guidage selon la revendication 6, dans lequel l'heure définie pour la notification des informations de notification de départ est changée en fonction de l'état en attente de départ.

18. Programme de guidage exécutant le procédé de guidage selon la revendication 16 ou 17 au moyen d'un ordinateur.

19. Support d'enregistrement contenant en lui le programme de guidage selon la revendication 18 d'une manière lisible par un ordinateur.
